# EUROPEAN PATENT APPLICATION

(11) **EP 4 691 788 A1**
(43) Date of publication of application: **11.02.2026**
(21) Application number: 24779542.0
(22) Date of filing: 14.03.2024
(51) Int. Cl.: B41M 5/00, C09D 11/322, C09D 11/54

(54) **PRETREATMENT LIQUID FOR INKJET INK, INK SET, IMAGE RECORDING METHOD, LAMINATE MANUFACTURING METHOD, IMAGE RECORDED MATTER, AND LAMINATE**

(30) Priority: 27.03.2023 JP 2023050204
(71) Applicant: FUJIFILM Corporation, Tokyo 106-8620 (JP)
(72) Inventor: FUJINO, Yuuta, Ashigarakami-gun, Kanagawa 258-8577 (JP); SEKINE, Shinichiro, Ashigarakami-gun, Kanagawa 258-8577 (JP); SUZUKI, Shota, Ashigarakami-gun, Kanagawa 258-8577 (JP); SATO, Ayato, Ashigarakami-gun, Kanagawa 258-8577 (JP)
(74) Representative: Klunker IP Patentanwälte PartG mbB
(86) International application number: PCT/JP2024/010123
(87) International publication number: WO 2024/203413

(57) **Abstract**

There are provided a pretreatment liquid for an ink jet ink, containing a coagulating agent which is at least one selected from the group consisting of an organic acid and a polyvalent metal compound, water, and a urethane resin, in which the urethane resin contains a polyol unit, a polyisocyanate unit, and an -SO₃⁻ group, a content of the -SO₃⁻ group with respect to a total amount of the urethane resin is 2% by mass to 6% by mass, and the -SO₃⁻ group is bonded to a terminal of a main chain of the urethane resin; and an application thereof.

## Description

### BACKGROUND OF THE INVENTION

### 1. Field of the Invention

The present disclosure relates to a pretreatment liquid for an ink jet ink, an ink set, an image recording method, a method of producing a laminate, an image recorded material, and a laminate.

### 2. Description of the Related Art

In the related art, various examinations have been conducted on an image recording method carried out using a pretreatment liquid and an ink.

For example, JP2021-042264A discloses the following ink jet recording liquid set as an ink jet recording liquid set that is excellent in image quality, substrate adhesiveness, and jetting stability on a low-absorbent substrate or a non-absorbent substrate, and excellent in the hot-water resistance of an image surface in a case of being formed into a coating film.

The ink jet recording liquid set disclosed in JP2021-042264A is an ink jet recording liquid set including at least an ink jet ink and a pretreatment liquid, in which the ink jet ink contains at least a pigment, an organic solvent, water, and a silicone-based surfactant, the pretreatment liquid contains at least water-insoluble resin fine particles and a pigment coagulating agent, and the silicone-based surfactant has a specific structure including an ethylene oxide group or the like.

### SUMMARY OF THE INVENTION

A laminate may be produced by applying a pretreatment liquid for an ink jet ink and an ink jet ink in this order onto an impermeable base material to record an image so that an image recorded material is obtained and laminating a base material for lamination on the image in the obtained image recorded material. This laminate is required to have boiling resistance (that is, resistance to a boiling treatment) in some cases.

In addition, the pretreatment liquid for an ink jet ink is required to have storage stability in some cases.

An object to be achieved by an embodiment of the present disclosure is to provide a pretreatment liquid for an ink jet ink, which has excellent storage stability and is capable of improving the boiling resistance of a laminate in a case where a laminate is produced by applying a pretreatment liquid for an ink jet ink and an ink jet ink in this order onto an impermeable base material to record an image so that an image recorded material is obtained and laminating a base material for lamination on the image in the obtained image recorded material.

An object to be achieved by another embodiment of the present disclosure is to provide an ink set including the pretreatment liquid for an ink jet ink, and an ink set, an image recording method, a method of producing a laminate, an image recorded material, and a laminate, using the pretreatment liquid for an ink jet ink.

The present disclosure includes the following aspects.
<1> A pretreatment liquid for an ink jet ink, comprising:
   a coagulating agent which is at least one selected from the group consisting of an organic acid and a polyvalent metal compound;
   water; and
   a urethane resin,
   in which the urethane resin contains a polyol unit, a polyisocyanate unit, and an -SO₃⁻group,
   a content of the -SO₃⁻ group with respect to a total amount of the urethane resin is 2% by mass to 6% by mass, and
   the -SO₃⁻ group is bonded to a terminal of a main chain of the urethane resin.
<2> The pretreatment liquid for an ink jet ink according to <1>,
   in which the urethane resin has a partial structure represented by Formula (I),

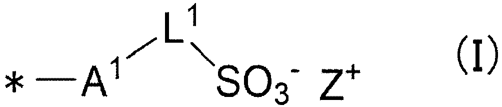

In Formula (I),
* represents a bonding position,
A¹ represents -NH- or -N(L⁴-Y⁴)-,
L⁴ represents a divalent group which is one kind selected from a first group consisting of an alkylene group, an alkenylene group, an alkynylene group, an arylene group, -O-, -NH-, and - C(=O)-, a divalent group formed by bonding two or more kinds selected from the first group, or a single bond,
Y⁴ represents an alkyl group, an alkenyl group, an alkynyl group, an aryl group, a halogen atom, -OH, -OR³, -NH₂, -NR³H, -NR³R⁴, or -C(=O)R³,
R³ and R⁴ each independently represent an alkyl group, an alkenyl group, an alkynyl group, or an aryl group,
L¹ represents an alkylene group having 1 to 4 carbon atoms, and
Z⁺ represents a countercation with respect to an -SO₃⁻ group.

<3> The pretreatment liquid for an ink jet ink according to <1> or <2>,
in which a weight-average molecular weight of the urethane resin is 5,000 or greater.

<4> The pretreatment liquid for an ink jet ink according to any one of <1> to <3>,
in which a glass transition temperature of the urethane resin is -60°C to 40°C.

<5> The pretreatment liquid for an ink jet ink according to any one of <1> to <4>,
in which in the urethane resin, a molar ratio of the polyol unit to the polyisocyanate unit is 0.5 to 0.9.

<6> The pretreatment liquid for an ink jet ink according to any one of <1> to <5>,
in which the urethane resin contains a countercation with respect to the -SO₃⁻ group, and a pKa of the countercation is 10.0 or greater.

<7> The pretreatment liquid for an ink jet ink according to any one of <1> to <6>,
in which the urethane resin contains a countercation with respect to the -SO₃⁻ group, and the countercation is an organic base cation.

<8> The pretreatment liquid for an ink jet ink according to any one of <1> to <7>,
in which the polyol unit includes a polycarbonate diol unit.

<9> An ink set comprising:
the pretreatment liquid for an ink jet ink according to any one of <1> to <8>; and
an ink which contains water, a pigment, and a urethane resin.

<10> An image recording method used for ink set according to <9>, the method comprising:
a step of applying the pretreatment liquid for an ink jet ink onto an impermeable base material; and
a step of applying the ink onto the impermeable base material onto which the pretreatment liquid for an ink jet ink has been applied, by an ink jet recording method.

<11> A method of producing a laminate, comprising:
a step of obtaining an image recorded material that includes the impermeable base material and an image disposed on the impermeable base material by the image recording method according to <10>; and
a step of laminating a base material for lamination on a side of the image recorded material on which the image is disposed, to obtain a laminate.

<12> An image recorded material comprising:
an impermeable base material; and
an image disposed on the impermeable base material,
in which the image includes
   a pretreatment layer disposed on the impermeable base material and containing a coagulating agent which is at least one selected from the group consisting of an organic acid and a polyvalent metal compound, and a urethane resin, and
   an ink layer disposed on the pretreatment layer and containing a pigment and a urethane resin,
the urethane resin in the pretreatment layer contains a polyol unit, a polyisocyanate unit, and an -SO₃⁻ group,
a content of the -SO₃⁻ group with respect to a total amount of the urethane resin is 2% by mass to 6% by mass, and
the -SO₃⁻ group is bonded to a terminal of a main chain of the urethane resin.

<13> A laminate comprising:
the image recorded material according to <12>; and
a base material for lamination laminated, which is on the image of the image recorded material.

According to an embodiment of the present disclosure, it is possible to provide a pretreatment liquid for an ink jet ink, which has excellent storage stability and is capable of improving the boiling resistance of a laminate in a case where a laminate is produced by applying a pretreatment liquid for an ink jet ink and an ink jet ink in this order onto an impermeable base material to record an image so that an image recorded material is obtained and laminating a base material for lamination on the image in the obtained image recorded material.

According to another embodiment of the present disclosure, there are provided an ink set including the pretreatment liquid for an ink jet ink, and an ink set, an image recording method, a method of producing a laminate, an image recorded material, and a laminate, using the pretreatment liquid for an ink jet ink.

### DESCRIPTION OF THE PREFERRED EMBODIMENTS

Hereinafter, an ink jet ink set for an impermeable base material, an image recording method, a method of producing a laminate, an image recorded material, and a laminate according to the present disclosure will be described in detail.

In the present specification, the numerical ranges shown using "to" means ranges including the numerical values described before and after "to" as the minimum value and the maximum value.

In a numerical range described in a stepwise manner in the present specification, an upper limit or a lower limit described in a certain numerical range may be replaced with an upper limit or a lower limit in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferred embodiments is a more preferred embodiment.

In the present specification, the meaning of the term "step" includes not only an independent step but also a step whose intended purpose is achieved even in a case where the step is not clearly distinguished from other steps.

In the present specification, the term "image" denotes an entire film formed by applying a pretreatment liquid and an ink in this order, and the term "image recording" denotes formation of an image (that is, the film).

Further, the concept of "image" in the present specification also includes a solid image.

In the present specification, "(meth)acrylate" is a concept including both acrylate and methacrylate. In addition, "(meth)acryl" is a concept that includes both acryl and methacryl.

In the present specification, the term "boiling treatment" denotes a treatment of immersing an object (specifically, a laminate) in water at 60°C to 100°C and heating the object for a certain time (for example, 10 minutes to 120 minutes).

### [Pretreatment liquid for ink jet ink]

The pretreatment liquid for an ink jet ink of the present disclosure (hereinafter, also simply referred to as a "pretreatment liquid") is a pretreatment liquid, containing
a coagulating agent which is at least one selected from the group consisting of an organic acid and a polyvalent metal compound,
water, and
a urethane resin,
in which the urethane resin contains a polyol unit, a polyisocyanate unit, and an -SO₃⁻group,
a content of the -SO₃⁻ group with respect to a total amount of the urethane resin is 2% by mass to 6% by mass, and
the -SO₃⁻ group is bonded to a terminal of a main chain of the urethane resin.

According to the pretreatment liquid of the present disclosure, the boiling resistance of a laminate in a case where a laminate is produced by applying the pretreatment liquid and the ink jet ink (hereinafter, also simply referred to as "ink") in this order onto an impermeable base material to record an image so that an image recorded material is obtained and laminating a base material for lamination on the image in the obtained image recorded material can be improved.

Further, the pretreatment liquid of the present disclosure has excellent storage stability.

The reason why the effect of improving the boiling resistance of the laminate described above can be obtained is considered to be that the flexibility of the layer derived from the pretreatment liquid and the adhesiveness to the impermeable base material are improved because the pretreatment liquid contains a urethane resin.

Furthermore, it is considered that the effect of improving the boiling resistance of the above-described laminate also contributes to the fact that the amount of the -SO₃⁻ group is 6% by mass or less with respect to the total amount of the urethane resin. That is, it is considered that since the amount of the -SO₃⁻ group is 6% by mass or less with respect to the total amount of the urethane resin, the excessive increase in the hydrophilicity of the urethane resin (that is, the hydrophobicity is maintained) is suppressed, the urethane resin is suppressed from swelling with water, and as a result, the decrease in the boiling resistance of the laminate is suppressed.

On the other hand, the reason why the pretreatment liquid has excellent storage stability is considered to be that the urethane resin in the pretreatment liquid has an -SO₃⁻ group bonded to a main chain terminal as a dispersion group, and the amount of the -SO₃⁻ group is 2% by mass or more with respect to the total amount of the urethane resin.

Specifically, it is considered that the -SO₃⁻ group as a dispersion group is bonded to the main chain terminal of the urethane resin, so that the degree of freedom of movement of the - SO₃⁻ group is secured, and as a result, the dispersion stability of the urethane resin in the pretreatment liquid is improved, and thus the storage stability of the pretreatment liquid is improved.

In general, the coagulating agent in the pretreatment liquid can act in a direction of reducing the dispersibility of the resin in the pretreatment liquid.

However, it is considered that the pretreatment liquid according to the present disclosure has excellent storage stability even though the pretreatment liquid contains a coagulating agent and a resin due to the above-described reason (action).

Hereinafter, each component that may be contained in the pretreatment liquid will be described.

### <Water>

The pretreatment liquid of the present disclosure contains water.

The content of water is preferably 50% by mass or greater and more preferably 60% by mass or greater with respect to the total amount of the pretreatment liquid.

The upper limit of the content of water depends on the amount of other components, but is preferably 90% by mass or less and more preferably 80% by mass or less with respect to the total amount of the pretreatment liquid.

### <Coagulating agent>

The pretreatment liquid according to the present disclosure contains at least one coagulating agent selected from the group consisting of an organic acid and a polyvalent metal compound.

The coagulating agent in the pretreatment liquid contributes to improving the image quality by aggregating the components in the ink jet ink in a case where the pretreatment liquid and the ink jet ink are applied in this order onto the impermeable base material to record an image.

Preferred examples of the coagulating agent also include the coagulating agents described in paragraphs 0122 to 0130 of WO2020/195360A.

### -Organic acid-

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

Further, it is preferable that at least a part of the acidic group is dissociated in the pretreatment liquid.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or higher. Further, it is more preferable that the organic acid has a high buffer capacity in a pH region with a pKa lower than the pKa of a functional group (for example, a carboxy group) that stably disperses particles in the ink.

### -Polyvalent metal compound-

Examples of the polyvalent metal compound include a polyvalent metal salt.

Examples of the polyvalent metal salt include an organic acid polyvalent metal salt and an inorganic acid polyvalent metal salt.

A polyvalent metal salt of the organic acid (for example, formic acid, acetic acid, or benzoic acid) described above is preferable as the organic acid polyvalent metal salt.

As the inorganic acid polyvalent metal salt, a nitric acid polyvalent metal salt, a hydrochloric acid polyvalent metal salt, or a thiocyanic acid polyvalent metal salt) is preferable.

Examples of the polyvalent metal salt include salts of alkaline earth metals of a group 2 (such as magnesium and calcium) in the periodic table, salts of transition metals of a group 3 (such as lanthanum) in the periodic table, salts of metals of a group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

Further, it is preferable that at least a part of the polyvalent metal compound is dissociated into polyvalent metal ions and counterions in the pretreatment liquid.

The content of the coagulating agent in the pretreatment liquid is preferably in a range of 0.1% by mass to 40% by mass, more preferably in a range of 0.1% by mass to 30% by mass, still more preferably in a range of 1% by mass to 20% by mass, and even still more preferably in a range of 1% by mass to 10% by mass with respect to the total amount of the pretreatment liquid.

From the viewpoint of further improving the boiling resistance of the laminate and the storage stability of the pretreatment liquid, the coagulating agent still more preferably contains an organic acid.

In this case, the content of the organic acid in the total amount of the coagulating agent is preferably in a range of 50% by mass to 100% by mass, more preferably in a range of 60% by mass to 100% by mass, and still more preferably in a range of 80% by mass to 100% by mass.

### <Urethane resin>

The pretreatment liquid of the present disclosure contains a urethane resin containing a polyol unit, a polyisocyanate unit, and an -SO₃⁻ group.

The content of the -SO₃⁻ group with respect to the total amount of the urethane resin is 2% by mass to 6% by mass.

The -SO₃⁻ group is bonded to a terminal of the main chain of the urethane resin.

In the present disclosure, the polyol unit means a structural unit derived from a polyol, and the polyisocyanate unit means a structural unit derived from a polyisocyanate.

The polyol unit and the polyisocyanate unit contained in the urethane resin may be used alone or in combination of two or more kinds thereof, respectively.

The urethane resin including a polyol unit, a polyisocyanate unit, and an -SO₃⁻ group is, in other words, a urethane resin which is a reaction product in which at least a polyol, a polyisocyanate, and a compound for introducing an -SO₃⁻ group (hereinafter, also referred to as a "compound for introducing a dispersion group") are reacted.

As the polyol and the polyisocyanate for forming a urethane resin, for example, the description in paragraphs 0031 to 0036 of JP2001-247787A, paragraphs 0033 to 0118 of WO2016/052053A, and paragraphs 0066 to 0223 of WO2016/152254A can be referred to.

### (Polyisocyanate unit and polyisocyanate)

The urethane resin has at least one polyisocyanate unit.

Hereinafter, preferable aspects of the polyisocyanate unit and preferable aspects of the polyisocyanate for forming the polyisocyanate unit will be described.

The polyisocyanate may be a polyisocyanate containing two isocyanate groups (that is, a diisocyanate (that is, a bifunctional isocyanate)) or a polyisocyanate containing three or more isocyanate groups (that is, a trifunctional or higher functional isocyanate).

A bifunctional to hexafunctional isocyanate is preferable as the polyisocyanate.

It is preferable that the polyisocyanate unit has the following structural unit (P1).

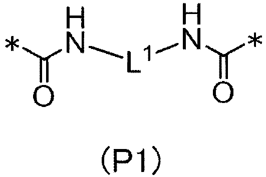

In the structural unit (P1), L¹ represents a divalent organic group having 1 to 20 carbon atoms, and * represents a bonding position.

Specific examples of L¹ include a residue obtained by removing two isocyanate groups (NCO groups) from the bifunctional isocyanate according to the following specific examples.

Specific examples of the bifunctional isocyanate are as follows. However, the bifunctional isocyanate is not limited to the following specific examples.

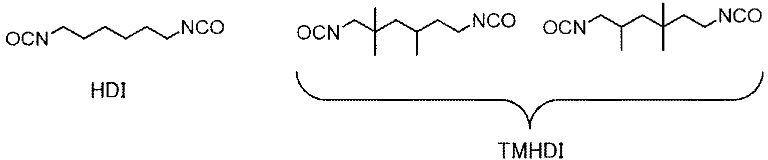

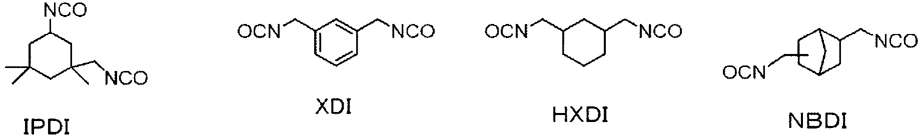

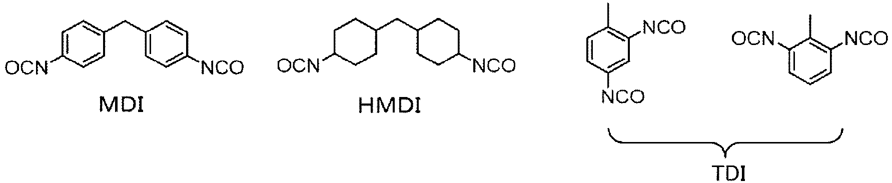

Further, a bifunctional isocyanate derived from the above-described specific examples can also be used as the bifunctional isocyanate. Examples thereof include DURANATE (registered trademark) D101, D201, and A101 (manufactured by Asahi Kasei Corporation).

In addition, it is preferable that the trifunctional or higher functional isocyanate is a reaction product of at least one selected from the group consisting of a bifunctional isocyanate and at least one selected from the group consisting of a compound containing three or more active hydrogen groups (for example, a trifunctional or higher functional polyol compound, a trifunctional or higher functional polyamine compound or a trifunctional or higher functional polythiol compound).

The number of moles (number of molecules) of the bifunctional isocyanate to react with the compound containing three or more active hydrogen groups is preferably 0.6 times or greater, more preferably 0.6 times to 5 times, still more preferably 0.6 times to 3 times, and even still more preferably 0.8 times to 2 times with respect to the number of moles of the active hydrogen group (number of equivalents of the active hydrogen group) in the compound containing three or more active hydrogen groups.

Examples of the bifunctional isocyanate for forming a trifunctional or higher functional isocyanate include the bifunctional isocyanates described in the above-described specific examples.

Examples of the compound containing three or more active hydrogen groups for forming a trifunctional or higher functional isocyanate include the compounds described in paragraphs 0057 and 0058 of WO2016/052053A.

Examples of the trifunctional or higher functional isocyanate include an adduct type trifunctional or higher functional isocyanate, an isocyanurate type trifunctional or higher functional isocyanate, and a biuret type trifunctional or higher functional isocyanate.

Examples of commercially available products of the adduct type trifunctional or higher functional isocyanate include TAKENATE (registered trademark) D-102, D-103, D-103H, D-103M2, P49-75S, D-110N, D-120N, D-140N, and D-160N (all manufactured by Mitsui Chemicals, Inc.), DESMODUR (registered trademark) L75 and UL57SP (Sumika Bayer Urethane Co., Ltd.), CORONATE (registered trademark) HL, HX, and L (Nippon Polyurethane Industry Co., Ltd.), and P301-75E (Asahi Kasei Corporation.).

Examples of commercially available products of the isocyanate type trifunctional or higher functional isocyanate include TAKENATE (registered trademark) D-127N, D-170N, D-170HN, D-172N, and D-177N (all manufactured by Mitsui Chemicals, Inc.), SUMIDUR N3300 and DESMODUR (registered trademark) N3600, N3900, and Z4470BA (all manufactured by Sumika Bayer Urethane Co., Ltd.), CORONATE (registered trademark) HX and HK (both manufactured by Nippon Polyurethane Industry Co., Ltd.), and DURANATE (registered trademark) TPA-100, TKA-100, TSA-100, TSS-100, TLA-100, and TSE-100 (all manufactured by Asahi Kasei Corporation.).

Examples of commercially available products of the biuret type trifunctional or higher functional isocyanate include TAKENATE (registered trademark) D-165N and NP1100 (both manufactured by Mitsui Chemicals, Inc.), DESMODUR (registered trademark) N3200 (sumika Bayer Urethane Co., Ltd.), and DURANATE (registered trademark) 24A-100 (Asahi Kasei Corporation.).

At least one of the polyisocyanates may be a polyisocyanate containing a hydrophilic group. The polyisocyanate containing a hydrophilic group can refer to the description in paragraphs 0112 to 0118 and 0252 to 0254 of WO2016/052053A.

At least one of the polyisocyanates may be a polyisocyanate containing a polymerizable group. The isocyanate containing a polymerizable group can refer to the description in paragraphs 0084 to 0089, 0203, and 0205 of WO2016/052053A.

### - Polyol unit and polyol -

The urethane resin has at least one polyol unit.

Hereinafter, preferable aspects of the polyol unit and preferable aspects of the polyol for forming the polyol unit will be described.

The polyol may be a polyol having two hydroxy groups (that is, a diol) or a polyol having three or more hydroxy groups.

It is preferable that the polyol unit has a structural unit (P0) shown below.

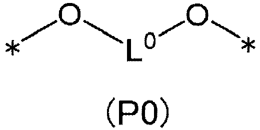

In the structural unit (P0), L⁰ represents a divalent organic group, and * represents a bonding position.

In the structural unit (P0), the divalent organic group represented by L⁰ may be a group consisting of a carbon atom and a hydrogen atom or a group having a carbon atom, a hydrogen atom, and a heteroatom (such as an oxygen atom, a nitrogen atom, or a sulfur atom).

The divalent organic group represented by L⁰ may include at least one of a hydrophilic group or a polymerizable group.

Specific examples of L⁰ include residues obtained by removing a hydrogen atom from each of two hydroxy groups in the diol shown below.

Hereinafter, specific examples of the diol which is a preferable aspect of the polyol will be shown, but the polyol is not limited to the following specific examples.

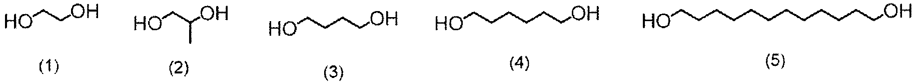

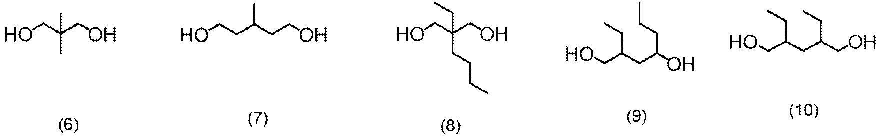

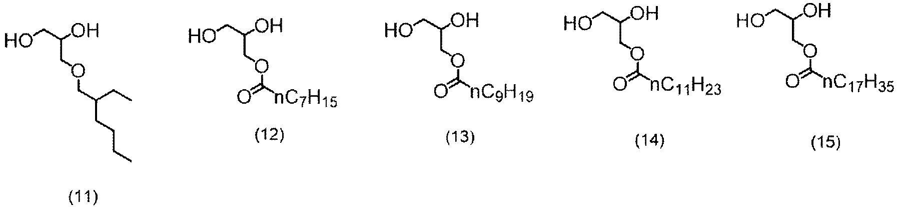

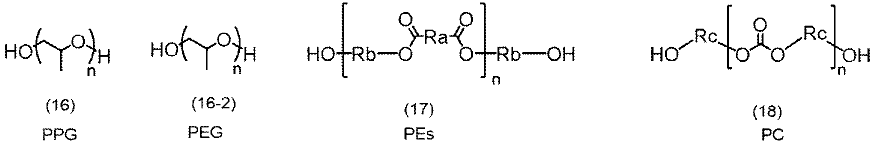

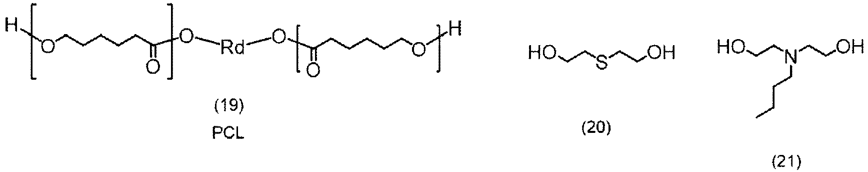

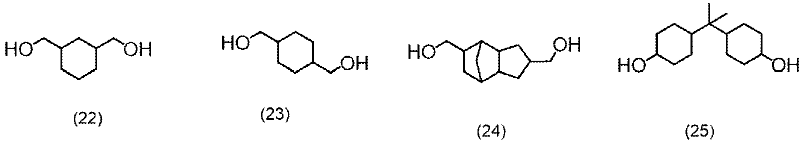

Among the compounds (12) to (15), nC₇H₁₅, nC₉H₁₉, nC₁₁H₂₃, and nC₁₇H₃₅ each represent a normal heptyl group, a normal nonyl group, a normal undecyl group, or a normal heptadecyl group.

The compound (16) PPG is polypropylene glycol, and n represents a repetition number.

The compound (16-2) PEG is polyethylene glycol, and n represents a repetition number.

The compound (17) PEs is a polyester diol, n represents a repetition number, and Ra and two Rb's each independently represent a divalent hydrocarbon group having 2 to 25 carbon atoms. n Ra's in the compound (17) PEs may be the same as or different from each other. (n + 1) Rb's in the compound (17) PEs may be the same as or different from each other.

The compound (18) PC is a polycarbonate diol, n represents a repetition number, and (n + 1) Rc's each independently represent an alkylene group having 2 to 12 carbon atoms (preferably 3 to 8 carbon atoms and more preferably 3 to 6 carbon atoms). (n + 1) Rc's in the compound (18) PC may be the same as or different from each other.

The compound (19) PCL is a polycaprolactone diol, n and m each represent a repetition number, and Rd represents an alkylene group having 2 to 25 carbon atoms.

It is preferable that the polyol unit in the urethane resin has a polycarbonate diol unit. In this manner, the boiling resistance of the laminate is further improved.

In this case, the proportion of the polycarbonate diol unit in the total amount of the polyol unit is preferably in a range of 50% by mass to 100% by mass, more preferably in a range of 60% by mass to 100% by mass, and still more preferably in a range of 80% by mass to 100% by mass.

The polycarbonate diol for forming the polycarbonate diol unit is, for example, the above-described compound (18) PC.

A commercially available product may be used as the polycarbonate diol.

Examples of the commercially available product include DURANOL T5651 (manufactured by Asahi Kasei Corporation), DURANOL T5652 (manufactured by Asahi Kasei Corporation), DURANOL T6002 (manufactured by Asahi Kasei Corporation), DURANOL T6001 (manufactured by Asahi Kasei Corporation), BENEBiOL HS0830B (manufactured by Mitsubishi Chemical Corporation), BENEBiOL HS0840H (manufactured by Mitsubishi Chemical Corporation), BENEBiOL NL1010DB (manufactured by Mitsubishi Chemical Corporation), and BENEBiOL NL2010DB (manufactured by Mitsubishi Chemical Corporation).

In the urethane resin, a molar ratio of the polyol unit to the polyisocyanate unit (hereinafter, also referred to as a molar ratio [OH/NCO]) is preferably 0.4 to 1.0, more preferably 0.5 to 0.9, and still more preferably 0.6 to 0.8.

In a case where the molar ratio [OH/NCO] is 0.4 or more, the boiling resistance of the laminate is further improved.

In a case where the molar ratio [OH/NCO] is 1.0 or less, the storage stability of the pretreatment liquid is further improved.

### (-SO₃⁻ group)

The urethane resin contains an -SO₃⁻ group.

The -SO₃⁻ group functions as a dispersion group for dispersing the urethane resin in the pretreatment liquid.

The -SO₃⁻ group is bonded to a terminal of the main chain of the urethane resin. In this manner, the mobility of the -SO₃⁻ group as a dispersion group is ensured, and as a result, the dispersion stability of the urethane resin and the storage stability of the pretreatment liquid are improved.

The content of the -SO₃⁻ group with respect to the total amount of the urethane resin is 2% by mass to 6% by mass.

In a case where the content of the -SO₃⁻ group with respect to the total amount of the urethane resin is 2% by mass or more, the effect of improving the storage stability of the pretreatment liquid is obtained.

In addition, in a case where the content of the -SO₃⁻ group with respect to the total amount of the urethane resin is 6% by mass or less, the urethane resin is prevented from being excessively hydrophilic, and as a result, the effect of improving the boiling resistance of the laminate is obtained.

The content of the -SO₃⁻ group with respect to the total amount of the urethane resin is preferably 3% by mass to 5% by mass.

The urethane resin preferably includes a partial structure represented by Formula (I) as a partial structure including an SO₃⁻ group.

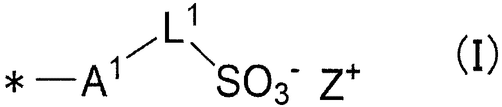

In Formula (I),
* represents a bonding position,
A¹ represents -NH- or -N(L⁴-Y⁴)-,
L⁴ represents a divalent group which is one kind selected from a first group consisting of an alkylene group, an alkenylene group, an alkynylene group, an arylene group, -O-, -NH-, and - C(=O)-, a divalent group formed by bonding two or more kinds selected from the first group, or a single bond,
Y⁴ represents an alkyl group, an alkenyl group, an alkynyl group, an aryl group, a halogen atom, -OH, -OR³, -NH₂, -NR³H, -NR³R⁴, or -C(=O)R³,
R³ and R⁴ each independently represent an alkyl group, an alkenyl group, an alkynyl group, or an aryl group,
L¹ represents an alkylene group having 1 to 4 carbon atoms, and
Z⁺ represents a countercation with respect to an -SO₃⁻ group.

The countercation represented by Z⁺ may or may not be bonded to the -SO₃⁻ group (that is, may be dissociated).

The preferred countercation will be described later.

The number of carbon atoms in the alkylene group in L⁴ is preferably 1 to 4.

The number of carbon atoms in the alkenylene group in L⁴ is preferably 2 to 4.

The number of carbon atoms in the alkynylene group in L⁴ is preferably 2 to 4.

The number of carbon atoms in the arylene group in L⁴ is preferably 6 to 12.

The number of carbon atoms in the alkyl group in Y⁴ is preferably 1 to 4.

The number of carbon atoms in the alkenyl group in Y⁴ is preferably 2 to 4.

The number of carbon atoms in the alkynyl group in Y⁴ is preferably 2 to 4.

The number of carbon atoms in the aryl group in Y⁴ is preferably 6 to 12.

As the halogen atom in Y⁴, a fluorine atom, a chlorine atom, a bromine atom, or an iodine atom is preferable.

The number of carbon atoms in the alkyl group in each of R³ and R⁴ is preferably 1 to 4.

The number of carbon atoms in the alkenyl group in each of R³ and R⁴ is preferably 2 to 4.

The number of carbon atoms in the alkynyl group in each of R³ and R⁴ is preferably 2 to 4.

The number of carbon atoms in the aryl group in each of R³ and R⁴ is preferably 6 to 12.

### (Compound for introducing -SO₃⁻ group)

The -SO₃⁻ group can be introduced into the urethane resin by using a compound for introducing an -SO₃⁻ group as one of raw materials in a case of manufacturing the urethane resin.

Examples of the compound for introducing an -SO₃⁻ group include a compound containing an -SO₃⁻ group and an active hydrogen group.

Examples of the active hydrogen group include an amino group (-NH₂), a secondary amino group (-NHR-; R is a substituent, for example, a "L⁴-Y⁴" group in Formula (I)), and a hydroxy group.

Examples of the compound for introducing an -SO₃⁻ group include a compound represented by Formula (IA).

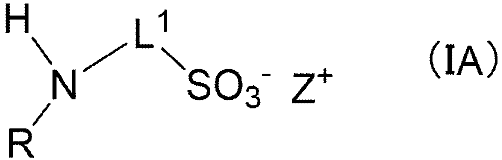

In Formula (IA), L¹ and Z⁺ have the same meanings as L¹ and Z⁺ in Formula (I), respectively.

In Formula (IA), R represents a hydrogen atom or a "L⁴-Y⁴" group in Formula (I).

Specific examples of the compound for introducing an -SO₃⁻ group include 2-aminoethanesulfonic acid (also known as taurine), aminomethanesulfonic acid, 3-amino-1-propanesulfonic acid, and 2-(methylamino)ethanesulfonic acid.

### (Countercation with respect to -SO₃⁻ group)

The urethane resin may contain a countercation with respect to the -SO₃⁻ group.

Examples of the countercation (hereinafter, also simply referred to as "countercation") with respect to the -SO₃⁻ group include a cation represented by Z⁺ in Formula (I) described above.

Examples of the countercation include an alkali metal cation and an organic base cation.

From the viewpoint of further improving the boiling resistance of the laminate, the countercation is preferably an organic base cation.

The molecular weight of the organic base cation is preferably 73 to 600, more preferably 73 to 400, and still more preferably 73 to 200.

The organic base cation is preferably an organic ammonium cation.

In addition, from the viewpoint of further improving the storage stability of the pretreatment liquid, the pKa of the countercation is preferably 9.0 or more and more preferably 10.0 or more.

The upper limit of the pKa of the countercation is, for example, 32.0, preferably 20.0, and more preferably 15.0.

The pKa means a value measured by neutralization titration at 25°C.

### (Compound for introducing countercation)

The countercation with respect to the -SO₃⁻ group can be introduced into the urethane resin by using a compound for introducing a countercation as one of raw materials in a case of manufacturing a urethane resin.

Examples of the compound for introducing a countercation include a compound obtained by removing one proton (H⁺) from a countercation.

In other words, examples of the countercation include a cation obtained by adding one proton (H⁺) to the compound for introducing a countercation.

Examples of the compound for introducing a countercation include diethylamine, triethylamine, diazabicycloundecene (DBU), dibutylamine, trimethylamine, triethanolamine, N-methyldiethanolamine, N,N-dimethylethanolamine, N,N-diisopropylethylamine, 2-aminoethanol, and 2-methylaminoethanol.

### (Preferred aspect of urethane resin)

Hereinafter, preferred aspects of the urethane resin in the pretreatment liquid will be described.

From the viewpoint of further improving the boiling resistance of the laminate, the weight-average molecular weight of the urethane resin is preferably 5,000 or more, more preferably 6,000 or more, and still more preferably 8,000 or more.

From the viewpoint of further improving the storage stability of the pretreatment liquid, the weight-average molecular weight of the urethane resin is preferably 50,000 or less, more preferably 40,000 or less, and still more preferably 30,000 or less.

From the above-described viewpoint, a preferred range of the weight-average molecular weight of the urethane resin is 5,000 to 50,000.

In the present disclosure, the weight-average molecular weight is measured by gel permeation chromatography (GPC). The measurement according to GPC is performed by connecting three columns of TSKgeL Super HZM-H, TSKgeL Super HZ4000, and TSKgel Super HZ2000 (all product names, manufactured by Tosoh Corporation) in series using HLC-8220GPC (manufactured by Tosoh Corporation) and tetrahydrofuran (THF) as an eluent.

Further, the measurement is performed under conditions of a sample concentration of 0.45% by mass, a flow rate of 0.35 ml/min, a sample injection volume of 10 µl, and a measurement temperature of 40°C using a differential refractive index detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

From the viewpoint of further improving the boiling resistance of the laminate, the glass transition temperature of the urethane resin is preferably -60°C to 40°C, more preferably -55°C to 20°C, still more preferably -55°C to 10°C, and even still more preferably -55°C to 0°C.

In the present disclosure, the glass transition temperature is measured using a differential scanning calorimeter, for example, "DSC-60" (product name, manufactured by Shimadzu Corporation).

The urethane resin may be a water-soluble urethane resin or a water-insoluble urethane resin (that is, urethane resin particles).

Among these, from the viewpoint of increasing the strength of the layer to be formed by using the pretreatment liquid, it is preferable that the urethane resin is in the form of urethane resin particles.

In the present disclosure, the term "water-soluble" indicates a property in which 1 g or greater of a substance is dissolved in 100 g of water at 25°C.

In the present disclosure, the term "water-insoluble" indicates a property in which less than 1 g of a substance is dissolved in 100 g of water at 25°C.

The average particle diameter of the urethane resin particles is preferably in a range of 1 nm to 200 nm, more preferably in a range of 3 nm to 200 nm, and still more preferably in a range of 50 nm to 150 nm.

Further, the average particle diameter thereof is determined by measuring the volume average particle diameter using a particle size distribution measuring device, for example, "NANOTRAC UPA-EX150" (product name, manufactured by Nikkiso Co., Ltd.) by a dynamic light scattering method.

The content of the urethane resin in the pretreatment liquid is preferably in a range of 1% by mass to 30% by mass, more preferably in a range of 3% by mass to 20% by mass, and still more preferably in a range of 5% by mass to 15% by mass with respect to the total amount of the pretreatment liquid.

### <Organic solvent>

The pretreatment liquid according to the present disclosure may contain at least one organic solvent.

The kind of the organic solvent is not limited, and examples thereof include:
a monoalcohol having 1 to 4 carbon atoms;
a diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol;
a triol such as glycerin, 1,2,6-hexanetriol, or trimethylolpropane;
alkylene glycol such as ethylene glycol or propylene glycol;
alkylene glycol monoalkyl ether such as ethylene glycol monoalkyl ether or propylene glycol monoalkyl ether;
polyalkylene glycol such as diethylene glycol, triethylene glycol, tetraethylene glycol, pentaethylene glycol, dipropylene glycol, or polyoxyethylene polyoxypropylene glycol;
polyalkylene glycol ether such as diethylene glycol monoalkyl ether, triethylene glycol monoalkyl ether, tripropylene glycol monoalkyl ether, or polyoxypropylene glyceryl ether;
2-pyrrolidone, and N-methyl-2-pyrrolidone.

The content of the organic solvent is preferably in a range of 1% by mass to 20% by mass and more preferably in a range of 3% by mass to 10% by mass with respect to the total amount of the pretreatment liquid.

### <Surfactant>

The pretreatment liquid according to the present disclosure may contain at least one surfactant.

The kind of the surfactant is not particularly limited, and may be any of an anionic surfactant, a cationic surfactant, a betaine-based surfactant, or a nonionic surfactant. Further, examples of the surfactant include an acrylic surfactant, a fluorine-based surfactant, and a silicone-based surfactant.

The content of the surfactant is preferably in a range of 0.1% by mass to 5% by mass and more preferably in a range of 0.2% by mass to 1% by mass with respect to the total amount of the pretreatment liquid.

### <Other components>

The pretreatment liquid of the present disclosure may contain other components in addition to the above-described components as necessary.

Examples of other components that may be contained in the pretreatment liquid include known additives such as a solid wetting agent, colloidal silica, an inorganic salt, a fading inhibitor, an emulsification stabilizer, a penetration enhancer, an ultraviolet absorbing agent, a preservative, a fungicide, a pH adjuster, a viscosity adjuster, a rust inhibitor, a chelating agent, and a water-soluble polymer compound (for example, water-soluble polymer compounds described in paragraphs 0026 to 0080 of JP2013-001854A).

### <Physical properties>

The pH of the pretreatment liquid is preferably in a range of 2.0 to 7.0 and more preferably in a range of 2.0 to 4.0. The pH is measured at 25°C using a pH meter, for example, a pH meter (model number "HM-31", manufactured by DKK-TOA CORPORATION).

From the viewpoint of the coating properties of the pretreatment liquid, the viscosity of the pretreatment liquid is preferably in a range of 0.5 mPa·s to 10 mPa·s and more preferably in a range of 1 mPa·s to 5 mPa·s. The viscosity is a value measured at 25°C using a viscometer.

The viscosity is measured at 25°C using a viscometer, for example, a TV-22 type viscometer (manufactured by Toki Sangyo Co., Ltd.).

The surface tension of the pretreatment liquid is preferably 60 mN/m or less, more preferably in a range of 20 mN/m to 50 mN/m, and still more preferably in a range of 30 mN/m to 45 mN/m. The surface tension is a value measured at a temperature of 25°C. The surface tension is measured at 25°C by a plate method using a surface tension meter, for example, an automatic surface tension meter (product name, "CBVP-Z", manufactured by Kyowa Interface Science Co., Ltd.).

### [Ink set]

The ink set according to the present disclosure contains
the pretreatment liquid according to the present disclosure described above,
an ink which is an ink jet ink containing water, a pigment, and a urethane resin.

Since the ink set of the present disclosure contains the pretreatment liquid of the present disclosure, the same effect as the effect of the pretreatment liquid of the present disclosure is exhibited.

### <Ink>

The ink set according to the present disclosure contains an ink which is an ink jet ink containing water, a pigment, and a urethane resin.

The ink included in the ink set of the present disclosure may be only one kind or two or more kinds.

### (Water)

The ink contains water.

A content of the water is preferably 10% by mass or more, more preferably 20% by mass or more, still more preferably 30% by mass or more, and particularly preferably 50% by mass or more with respect to the total amount of the ink.

The upper limit of the content of the water is appropriately determined according to contents of other components, and is, for example, 99% by mass, preferably 95% by mass, and more preferably 90% by mass with respect to the total amount of the ink.

### (Urethane resin)

The ink contains at least one kind of urethane resin.

The ink may contain only one or two or more kinds of urethane resins.

The urethane resin in the ink and the urethane resin in the pretreatment liquid may be the same as or different from each other.

A polyester-based urethane resin having an ester bond in the main chain, a polycarbonate-based urethane resin having a carbonate bond in the main chain, or a polyether-based urethane resin having an ether bond in the main chain is preferable as the urethane resin in the ink.

The urethane resin in the ink may be a water-soluble urethane resin or a water-insoluble urethane resin (that is, urethane resin particles).

Among these, from the viewpoint of increasing the strength of the layer to be formed by using the ink, it is preferable that the urethane resin is in the form of urethane resin particles.

In a case where the urethane resin in the ink is in the form of urethane resin particles, from the viewpoint of jetting stability, the urethane resin particles have an average particle diameter of preferably 1 nm to 200 nm, more preferably 3 nm to 200 nm, and still more preferably 5 nm to 50 nm.

The average particle diameter of the urethane resin particles in the ink can be measured by the same method as the method for measuring the average particle diameter of the urethane resin particles in the pretreatment liquid.

The urethane resin in the ink may be any of anionic, cationic, or nonionic.

From the viewpoint of improving the storage stability of the ink, it is preferable that the urethane resin is an anionic urethane resin.

The weight-average molecular weight (Mw) of the urethane resin in the ink is not particularly limited, but is preferably in a range of 1,000 to 300,000, more preferably in a range of 2,000 to 200,000, and still more preferably in a range of 10,000 to 150,000.

The weight-average molecular weight of the urethane resin in the ink can be measured by the same method as that for the weight-average molecular weight of the urethane resin in the pretreatment liquid.

A commercially available product may be used as the urethane resin in the ink.

Examples of the commercially available product include SUPERFLEX Series (manufactured by DKS Co., Ltd.), PERMARIN UA Series and UCOAT Series (manufactured by Sanyo Chemical Industries, Ltd.), TAKELAC Series (manufactured by Mitsui Chemicals, Inc.), and PUE Series (manufactured by Murayama Chemical Research Laboratory Co., Ltd.).

The content of the urethane resin in the ink is preferably in a range of 1% by mass to 20% by mass, more preferably in a range of 2% by mass to 15% by mass, and still more preferably in a range of 2% by mass to 10% by mass with respect to the total amount of the ink.

### (Pigment)

The ink contains at least one pigment.

The pigment contained in the ink may be a white pigment or a color pigment.

The ink may be a white ink containing a white pigment or a colored ink containing a color pigment.

In the present disclosure, the color pigment denotes a chromatic pigment or a black pigment.

In the present disclosure, the colored ink denotes a chromatic ink (such as a cyan ink, a magenta ink, or a yellow ink) or a black ink.

From the viewpoint of covering property of an image to be obtained (that is, property of covering a surface on which the image is recorded, such as a surface of the impermeable base material), the ink is preferably a white ink containing a white pigment.

Here, the covering property of the image means a property of covering a surface (for example, a surface of an impermeable base material, a surface of an image formed as an undercoat, or the like) on which the image is recorded.

### (White pigment)

Examples of the white pigment include inorganic pigments such as titanium dioxide, barium sulfate, calcium carbonate, silica, zinc oxide, zinc sulfide, mica, talc, and pearl.

Among these, the white pigment is preferably titanium dioxide, barium sulfate, calcium carbonate, or zinc oxide and more preferably titanium dioxide.

From the viewpoint of the covering property, the average primary particle diameter of the white pigment is preferably 150 nm or greater and more preferably 200 nm or greater. Further, from the viewpoint of the jettability of the ink, the average primary particle diameter of the white pigment is preferably 400 nm or less and more preferably 350 nm or less.

In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by a TEM, measuring the primary particle diameters of 50 particles, and averaging the measured diameters. As the transmission electron microscope, a transmission electron microscope 1200EX (manufactured by JEOL Ltd.) can be used.

From the viewpoints of the image density and the jettability, the content of the white pigment is preferably in a range of 2% by mass to 25% by mass, more preferably in a range of 5% by mass to 25% by mass, and still more preferably in a range of 10% by mass to 20% by mass with respect to the total amount of the ink.

Further, the ink may contain, in place of the white pigment or in addition to the white pigment, a color pigment.

In a case of an aspect in which the ink contains a color pigment, the kind and the content of the color pigment can refer to the description in the section of the second ink described later.

### (Pigment dispersing resin)

The ink may contain at least one pigment dispersing resin.

In the present disclosure, the pigment dispersing resin is a resin having a function of dispersing a pigment.

The pigment dispersing resin may be a random copolymer or a block copolymer.

Further, the pigment dispersing resin may have a crosslinking structure.

The ink may be prepared using a pigment dispersion liquid containing a pigment and a pigment dispersing resin.

A random copolymer is preferable as the pigment dispersing resin.

It is preferable that the random copolymer has a structural unit derived from a hydrophobic monomer and a structural unit derived from a monomer containing an anionic group (hereinafter, referred to as "anionic group-containing monomer"). From the viewpoint of dispersion stability, the content ratio (x:y) of a structural unit x derived from a hydrophobic monomer to a structural unit y derived from an anionic group-containing monomer is preferably in a range of 8:1 to 1:1.

The structural unit contained in the random copolymer and derived from a hydrophobic monomer may be used alone or two or more kinds thereof.

The structural unit contained in the random copolymer and derived from an anionic group-containing monomer may be used alone or two or more kinds thereof.

The hydrophobic monomer includes preferably a monomer containing a hydrocarbon group having 4 or more carbon atoms, more preferably an ethylene unsaturated monomer containing a hydrocarbon group having 4 or more carbon atoms, and still more preferably a (meth)acrylate containing a hydrocarbon group having 4 or more carbon atoms. The hydrocarbon group may be any of a chain-like hydrocarbon group, an alicyclic hydrocarbon group, or an aromatic hydrocarbon group. The number of carbon atoms of the hydrocarbon group is more preferably 6 or more and still more preferably 10 or more. The upper limit of the number of carbon atoms of the hydrocarbon group is, for example, 20.

Examples of the (meth)acrylate containing a chain-like hydrocarbon group having 4 or more carbon atoms include n-butyl (meth)acrylate, 2-ethylhexyl (meth)acrylate, octyl (meth)acrylate, lauryl (meth)acrylate, and stearyl (meth)acrylate. The number of carbon atoms in the chain-like hydrocarbon group is preferably 6 or more, more preferably 8 or more, and particularly preferably 12 or more. Among these, it is preferable that the ethylene unsaturated monomer containing a chain-like hydrocarbon group having 4 or more carbon atoms is lauryl (meth)acrylate or stearyl (meth)acrylate.

Examples of the (meth)acrylate containing an alicyclic hydrocarbon group having 4 or more carbon atoms include (bicyclo[2.2.1]heptyl-2) (meth)acrylate, 1-adamantyl (meth)acrylate, 2-adamantyl (meth)acrylate, 3-methyl-1-adamantyl (meth)acrylate, 3,5-dimethyl-1-adamantyl (meth)acrylate, 3-ethyladamantyl (meth)acrylate, 3-methyl-5-ethyl-1-adamantyl (meth)acrylate, 3,5,8-triethyl-1-adamantyl (meth)acrylate, 3,5-dimethyl-8-ethyl-1-adamantyl (meth)acrylate, 2-methyl-2-adamantyl (meth)acrylate, 2-ethyl-2-adamantyl (meth)acrylate, 3-hydroxy-1-adamantyl (meth)acrylate, octahydro-4,7-methanoinden-5-yl (meth)acrylate, octahydro-4,7-methanoinden-1-ylmethyl (meth)acrylate, 1-menthyl (meth)acrylate, tricyclodecane (meth)acrylate, 3-hydroxy-2,6,6-trimethyl-bicyclo[3.1.1]heptyl (meth)acrylate, 3,7,7-trimethyl-4-hydroxy-bicyclo[4.1.0]heptyl (meth)acrylate, (nor)bornyl (meth)acrylate, isobornyl (meth)acrylate, 2,2,5-trimethylcyclohexyl (meth)acrylate, and cyclohexyl (meth)acrylate. The number of carbon atoms of the alicyclic hydrocarbon group is more preferably 6 or more. Among these, it is preferable that the ethylene unsaturated monomer containing an alicyclic hydrocarbon group having 4 or more carbon atoms is isobornyl (meth)acrylate or cyclohexyl (meth)acrylate.

Examples of the (meth)acrylate containing an aromatic hydrocarbon group having 4 or more carbon atoms include 2-naphthyl (meth)acrylate, phenoxyethyl (meth)acrylate, and benzyl (meth)acrylate. Among these, benzyl (meth)acrylate is preferable as the ethylene unsaturated monomer containing an aromatic hydrocarbon group having 4 or more carbon atoms.

The hydrophobic monomer may further contain a (meth)acrylate containing a hydrocarbon group having 1 to 3 carbon atoms.

Examples of the (meth)acrylate containing a hydrocarbon group having 1 to 3 carbon atoms include methyl (meth)acrylate, ethyl (meth)acrylate, n-propyl (meth)acrylate, and hydroxyethyl (meth)acrylate.

Among these, from the viewpoint of improving the dispersion stability of the white pigment, it is preferable that the structural unit contained in the pigment dispersing resin and derived from a hydrophobic monomer includes a structural unit derived from a (meth)acrylate containing a chain-like hydrocarbon group having 4 or more carbon atoms and a structural unit derived from a (meth)acrylate containing an aromatic hydrocarbon group having 4 or more carbon atoms.

Examples of the anionic group in the anionic group-containing monomer include a carboxy group, a salt of the carboxy group, a sulfo group, a salt of the sulfo group, a phosphoric acid group, a salt of the phosphoric acid group, a phosphonic acid group, and a salt of the phosphonic acid group.

Examples of the counterion in a salt include an alkali metal ion such as a sodium ion, a potassium ion, or a lithium ion, an alkaline earth metal ion such as a calcium ion or a magnesium ion, and an ammonium ion.

Among these, a carboxy group or a salt of the carboxy group is preferable as the anionic group.

Examples of the carboxy group-containing monomer include (meth)acrylic acid, β-carboxyethyl acrylate, fumaric acid, itaconic acid, maleic acid, and crotonic acid.

From the viewpoint of the dispersion stability, (meth)acrylic acid or β-carboxyethyl acrylate is preferable, and (meth)acrylic acid is more preferable as the anionic group-containing monomer.

The ratio between the content of the white pigment and the content of the pigment dispersing resin is preferably in a range of 1:0.04 to 1:3, more preferably in a range of 1:0.05 to 1:1, and still more preferably in a range of 1:0.05 to 1:0.5 in terms of the mass.

From the viewpoint of the dispersion stability, the acid value of the pigment dispersing resin is preferably 100 mgKOH/g or greater and more preferably 120 mgKOH/g or greater.

On the other hand, from the viewpoint of dispersion stability, the acid value of the pigment dispersing resin is preferably 300 mgKOH/g or less and more preferably 230 mgKOH/g or less.

In a case where the ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the ink.

### (Organic solvent)

It is preferable that the ink contains an organic solvent.

In this manner, jetting stability is improved.

The colored ink may contain only one or two or more kinds of organic solvents.

Examples of the organic solvent include the same organic solvents as the organic solvents contained in the pretreatment liquid.

From the viewpoint of the jetting stability, it is preferable that the organic solvent includes at least one selected from the group consisting of alkylene glycol and alkylene glycol monoalkyl ether.

A content of the organic solvent is preferably 10% by mass to 40% by mass and more preferably 15% by mass to 30% by mass with respect to the total amount of the ink.

### (Additive)

The ink may contain an additive such as a surfactant, a water-soluble resin, a co-sensitizer, an ultraviolet absorbing agent, an antioxidant, a fading inhibitor, a conductive salt, and a basic compound, as necessary.

### (Physical properties)

From the viewpoint of improving the jetting stability, a pH (25°C) of the ink is preferably 7 to 10 and more preferably 7.5 to 9.5. The pH of the colored ink can be measured by the same method as that for the pH of the pretreatment liquid.

The viscosity (30°C) of the ink is preferably in a range of 0.5 mPa·s to 30 mPa·s, more preferably in a range of 2 mPa·s to 20 mPa·s, preferably in a range of 2 mPa·s to 15 mPa·s, and still more preferably in a range of 3 mPa·s to 10 mPa·s. The viscosity of the colored ink can be measured by the same method as that for the viscosity of the pretreatment liquid.

A surface tension (25°C) of the ink is preferably 60 mN/m or less, more preferably 20 mN/m to 50 mN/m, and still more preferably 30 mN/m to 45 mN/m.

The surface tension can be measured by the same method as that for the pretreatment liquid.

### <First ink and second ink>

An ink set according to the embodiment of the present disclosure may include
a white ink (hereinafter, also referred to as a "first ink") which is an ink jet ink containing water, a white pigment, and a urethane resin, and
a colored ink (hereinafter, also referred to as a "second ink") which is an ink jet ink containing water, a color pigment, and a urethane resin.

In this case, the ink set may include two or more kinds of white inks, or may include two or more kinds of colored inks (for example, a combination of a cyan ink, a magenta ink, a yellow ink, and a black ink).

That is, one specific aspect of the ink set of the present disclosure is an aspect including
the pretreatment liquid of the present disclosure,
a first ink as a white ink which is an ink jet ink containing water, a white pigment, and a resin having a carboxy group, and
a second ink as a colored ink which is an ink jet ink containing water, a color pigment, and a resin having a carboxy group.

The preferable aspects of the second ink are the same as the preferable aspects of the first ink (that is, the white ink) except that the second ink contains a color pigment as an indispensable component.

For example, the preferred aspect of each of the kind and content of each component in the second ink is the same as the preferred aspect of each of the kind and content of each component in the first ink.

### (Color pigment)

A commercially available organic pigment or inorganic pigment may be used as the color pigment.

Examples of the color pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

Further, the color pigment may be a water-insoluble pigment that can be dispersed in water by a dispersing agent, or may be a self-dispersing pigment.

The self-dispersing pigment is a pigment that can be dispersed in water without using a dispersing agent.

The self-dispersing pigment is, for example, a compound in which at least one selected from the group consisting of hydrophilic groups such as a carbonyl group, a hydroxyl group, a carboxyl group, a sulfo group, and a phosphoric acid group and salts thereof is chemically bonded to a surface of a pigment directly or via another group.

The kind of the color pigment is not particularly limited, and examples thereof include a cyan pigment, a magenta pigment, a yellow pigment, and a black pigment.

From the viewpoints of the image density and the jettability of the second ink, the content of the color pigment is preferably in a range of 1% by mass to 20% by mass, more preferably in a range of 1% by mass to 15% by mass, and still more preferably in a range of 1% by mass to 10% by mass with respect to the total amount of the second ink.

### [Image recording method]

The image recording method of the present disclosure includes
a step of applying the pretreatment liquid of the present disclosure onto an impermeable base material (hereinafter, also referred to as a "pretreatment liquid applying step"), and
a step of applying an ink (that is, an inkjet ink, the same applies hereinafter) containing water, a pigment, and a urethane resin onto a region onto which the pretreatment liquid is applied on the impermeable base material, by an ink jet recording method (hereinafter, also referred to as an "ink applying step").

Since the image recording method of the present disclosure uses the above-described pretreatment liquid of the present disclosure, the same effect as the effect of the above-described pretreatment liquid of the present disclosure is exhibited.

The image recording method of the present disclosure may be performed using the ink set of the present disclosure described above.

The ink used in the ink applying step has the same meaning as the ink described in the section of the ink set of the present disclosure described above, and the same applies to the preferred aspect thereof.

From the viewpoint of covering property of the image, the ink used in the ink applying step is preferably a white ink containing a white pigment.

### <Pretreatment liquid applying step>

The pretreatment liquid applying step is a step of applying the pretreatment liquid in the ink set of the present disclosure (that is, the pretreatment liquid of the present disclosure) onto the impermeable base material.

### (Impermeable base material)

In the present disclosure, the impermeability in the impermeable base material denotes a property that the water absorption rate in 24 hours which is measured in conformity with ASTM D570-98 (2018) is 2.5% or less. Here, the unit "%" of the water absorption rate is on a mass basis. The water absorption rate is preferably 1.0% or less and more preferably 0.5% or less.

Examples of the material of the impermeable base material include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the impermeable base material is a resin. That is, it is preferable that the impermeable base material is a resin base material.

Examples of the material of the impermeable base material are as described above, but polypropylene, polyethylene, polyethylene terephthalate, nylon, an acrylic resin, or polyvinyl chloride is preferable from the viewpoint of versatility.

As the shape of the impermeable base material, a sheet-like (film-like) or a plate-like impermeable base material is preferable. Examples of the impermeable base material having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the impermeable base material made of a resin include a resin sheet (resin film), and more specific examples thereof include a flexible packaging material for packaging food or the like and a panel for guiding the floor of a mass retailer.

Examples of the impermeable base material include a textile (woven fabric) or nonwoven fabric formed of impermeable fibers in addition to a sheet-like (film-like) or plate-like impermeable base material.

Further, the thickness of the impermeable base material is preferably in a range of 0.1 µm to 1,000 µm, more preferably in a range of 0.1 µm to 800 µm, and still more preferably in a range of 1 µm to 500 µm.

The impermeable base material may be subjected to a hydrophilization treatment. Examples of the hydrophilization treatment include a corona treatment, a plasma treatment, a flame treatment, a heat treatment, an abrasion treatment, a light irradiation treatment (such as a UV treatment), and a flame treatment, but the hydrophilization treatment is not limited thereto. The corona treatment can be performed using, for example, Corona Master (product name, "PS-10S", manufactured by Shinko Electric & Instrumentation Co., Ltd.). The conditions for the corona treatment may be appropriately selected according to the kind of the impermeable base material and the like.

The impermeable base material may be an impermeable base material having transparency.

Here, the expression of "having transparency" denotes that the transmittance of visible light having a wavelength of 400 nm to 700 nm is 80% or greater (preferably 90% or greater).

In a case where the impermeable base material is an impermeable base material having transparency, the image is easily visually recognized through the impermeable base material from the image non-recorded surface side of the impermeable base material.

For example, in a case where the impermeable base material is an impermeable base material having transparency, a colored image (for example, a pattern image such as a character or a figure) having a white image (for example, a solid image) as a background is easily visually recognized through the impermeable base material from the image non-recorded surface side of the impermeable base material in a case where the pretreatment liquid, the second ink as the colored ink, and the first ink as the white ink are applied in this order onto the impermeable base material to record an image.

### (Application of pretreatment liquid)

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, and a reverse roll coater.

### (Heating and drying pretreatment liquid)

The pretreatment liquid applying step may include applying the pretreatment liquid onto the impermeable base material and heating and drying the pretreatment liquid applied onto the impermeable base material.

Examples of the means for heating and drying the pretreatment liquid include known heating means such as a heater, known air blowing means such as a dryer, and means for combining these.

Examples of the method of heating and drying the pretreatment liquid include a method of applying heat using a heater or the like from a side of the impermeable base material opposite to the surface onto which the pretreatment liquid has been applied; a method of applying warm air or hot air to the surface of the impermeable base material onto which the pretreatment liquid has been applied; a method of applying heat using an infrared heater from the surface of the impermeable base material onto which the pretreatment liquid has been applied or from a side of the impermeable base material opposite to the surface onto which the pretreatment liquid has been applied; and a method of combining a plurality of these methods.

The heating temperature of heating and drying the pretreatment liquid is preferably 35°C or higher and more preferably 40°C or higher. The upper limit of the heating temperature is not particularly limited, but is preferably 100°C, more preferably 90°C, and still more preferably 70°C.

The time of heating and drying the pretreatment liquid is not particularly limited, but is preferably in a range of 0.5 seconds to 60 seconds, more preferably in a range of 0.5 seconds to 20 seconds, and still more preferably in a range of 0.5 seconds to 10 seconds.

### <Ink applying step>

The ink applying step is a step of applying the ink onto the impermeable base material onto which the pretreatment liquid has been applied, using an ink jet recording method.

By performing the present step, the components in the ink are aggregated by the action of the coagulating agent in the pretreatment liquid on the impermeable base material, and thus an image is obtained.

### (Application of ink)

The method of jetting the ink in the inkjet recording method is not particularly limited, and any of known methods such as an electric charge control method of jetting an ink using an electrostatic attraction force, a drop-on-demand method (pressure pulse method) using a vibration pressure of a piezoelectric element, an acoustic ink jet method of jetting an ink using a radiation pressure by converting an electric signal into an acoustic beam and irradiating the ink with the acoustic beam, and a thermal ink jet (bubble jet (registered trademark)) method of heating an ink to form air bubbles and using the generated pressure may be used.

As the ink jet recording method, particularly, an ink jet recording method, described in JP1979-59936A (JP-S54-59936A), of jetting an ink from a nozzle using an action force caused by a rapid change in volume of the ink after being subjected to an action of thermal energy can be effectively used. Further, as the ink jet recording method, the method described in paragraphs 0093 to 0105 of JP2003-306623A can also be employed.

The application of the ink onto the impermeable base material using the ink jet recording method is performed by allowing the ink to be jetted from a nozzle of an ink jet head.

Examples of the system of the ink jet head include a shuttle system of performing recording while scanning a short serial head in the width direction of a medium to be recorded and a line system of using a line head in which recording elements are aligned in correspondence with the entire area of one side of a medium to be recorded.

In the line system, image recording can be performed on the entire surface of the medium to be recorded by scanning the medium to be recorded in a direction intersecting the direction in which the recording elements are aligned. In the line system, a transport system such as a carriage that scans a short head in the shuttle system is not necessary. Further, in the line system, since movement of a carriage and complicated scanning control between the short head and the recorded medium are not necessary as compared with the shuttle system, only the recorded medium moves. Therefore, according to the line system, image recording at a higher speed than that of the shuttle system can be realized.

The ink is preferably applied using an ink jet head having a resolution of 300 dpi or more (more preferably 600 dpi or more and still more preferably 800 dpi or more). Here, dpi stands for dot per inch, and 1 inch is 2.54 cm.

From the viewpoint of obtaining an image with high definition, a droplet amount of the ink is preferably 1 picoliter (pL) to 10 pL and more preferably 1.5 pL to 6 pL.

The application amount of the ink onto the region of the impermeable base material onto which the pretreatment liquid is applied is preferably in a range of 3.0 g/m² to 15.0 g/m² and more preferably in a range of 5.0 g/m² to 12.0 g/m².

### (Heating and drying)

The ink applying step may include
applying the ink onto the impermeable base material to which the pretreatment liquid is applied by an ink jet method, and
heating and drying the applied ink.

A method of heating and drying is not particularly limited, and examples thereof include infrared (IR) drying, warm air drying, and heating and drying using a heating device (for example, a heater, a hot plate, a heating furnace, or the like).

The method of heating and drying may be a method of combining two or more of the above-described methods.

The heating and drying can be performed by heating the ink from at least one of the image recorded surface side or the image non-recorded surface side of the impermeable base material.

A heating temperature in the heating and drying of the ink is preferably 35°C or higher, more preferably 40°C or higher, still more preferably 50°C or higher, and even more preferably 60°C or higher.

The upper limit of the heating temperature is not particularly limited, but is preferably 100°C and more preferably 90°C.

A heating time in the heating and drying of the ink is not particularly limited, but is preferably 1 second to 180 seconds, more preferably 1 second to 120 seconds, and still more preferably 1 second to 60 seconds.

### <Embodiment>

As an example of the image recording method of the present disclosure in a case of using two or more color inks, an image recording method using the above-described first ink (that is, white ink) and second ink (that is, colored ink) is shown.

The image recording method according to the present example includes
a step of applying the pretreatment liquid of the present disclosure onto the impermeable base material, and
a step of applying each of the first ink (that is, the white ink) and the second ink (that is, the colored ink) onto the region of the impermeable base material onto which the pretreatment liquid is applied, by an ink jet recording method.

The step of applying the pretreatment liquid onto the impermeable base material is as described above.

According to the image recording method of the present embodiment, a multicolor image can be recorded with the first ink (that is, the white ink) and the second ink (that is, the colored ink).

Examples of the multicolor image include a colored image (for example, a pattern image such as a character or a figure) having a white image (for example, a solid image) as a background.

Any of the first ink (that is, the white ink) or the second ink (that is, the colored ink) may be applied first in the application order.

For example, in a case where the image is visually recognized from the image recording surface side, the first ink (that is, the white ink) and the second ink (that is, the colored ink) are applied in this order.

In a case where the image is visually recognized from the image non-recording surface side through the impermeable base material, the second ink (that is, the colored ink) and the first ink (that is, the white ink) are applied in this order. In this manner, for example, a multicolor image in which a pattern image (a character, a figure, or the like) recorded with the colored ink and a white image in the form of a solid image recorded with the white ink to cover the pattern image are disposed on the impermeable base material in this order is recorded.

The method of applying each of the first ink and the second ink using an inkjet recording method in the step of applying the first ink and the second ink is as described above.

Further, the step of applying the first ink and the second ink may include heating and drying the inks after application of at least one of the first ink or the second ink. The preferable conditions for heating and drying are as described above.

For example, as an aspect of the present step, an aspect in which the application of the second ink (that is, the colored ink), the application of the first ink (that is, the white ink), and the drying are performed in this order is mentioned. In this aspect, the second ink may or may not be heated and dried between the application of the second ink and the application of the ink.

### [Method of producing laminate]

A method of producing a laminate according to the present disclosure includes
a step of obtaining an image recorded material that comprises the impermeable base material and an image disposed on the impermeable base material by the image recording method of the present disclosure described above, and
a step of laminating a base material for lamination on a side of the image recorded material where the image has been disposed, to obtain a laminate.

Since the method of producing a laminate according to the present disclosure includes the image recording method according to the present disclosure described above, the same effects as the effects of the image recording method according to the present disclosure described above are exhibited. Specifically, a laminate having excellent boiling resistance can be obtained.

The step of obtaining an image recorded material can refer to the image recording method of the present disclosure.

The step of obtaining a laminate is a step of laminating the base material for lamination on a side of the image recorded material where the image has been disposed, to obtain a laminate.

The lamination can be performed by a method of superimposing the base material for lamination on the side of the image recorded material where the image has been disposed via another layer (for example, an adhesive layer) and attaching the base material thereto, a method of attaching the base material for lamination to the side of the image recorded material where the image has been disposed via a laminator in a state where the base material is superimposed on the side thereof, or the like. In the latter case, a commercially available laminator can be used.

The lamination temperature in a case of carrying out the lamination is not particularly limited. For example, in a case where the image recorded material and the base material for lamination are attached to each other via another layer (for example, an adhesive layer), the temperature may be 20°C or higher. Further, in a case where a laminator is used, the temperature of a laminating roll may be set to be in a range of 20°C to 80°C. The pressure-bonding force between a pair of laminating rolls may be appropriately selected as necessary.

It is preferable that the base material for lamination is a resin base material.

The resin base material is not particularly limited, and examples thereof include a base material consisting of a thermoplastic resin.

A base material obtained by molding a thermoplastic resin in a sheet shape is exemplified as the resin base material.

It is preferable that the resin base material contains polypropylene, polyethylene terephthalate, nylon, polyethylene, or polyimide.

The shape of the resin base material is not particularly limited, but it is preferable that the resin base material has a sheet shape. The thickness of the resin base material is preferably in a range of 10 µm to 200 µm and more preferably in a range of 10 µm to 100 µm.

In the step of obtaining a laminate, the base material for lamination may be laminated directly on a side of the image recorded material where the image has been disposed or via another layer (for example, an adhesive layer).

In a case where the base material for lamination is laminated directly on a side of the image recorded material where the image has been disposed, the lamination can be performed by a known method such as thermocompression bonding or thermal fusion welding.

Further, in a case where the base material for lamination is laminated on a side of the image recorded material where the image has been disposed via an adhesive layer, the lamination can be performed by, for example, a method of coating the side of the image recorded material where the image has been disposed with an adhesive, placing the base material for lamination, and bonding the image recorded material to the base material for lamination.

Further, in the case where the base material for lamination is laminated on a side of the image recorded material where the image has been disposed via an adhesive layer, the lamination can also be performed by an extrusion lamination method (that is, sandwich lamination) or the like.

It is preferable that the adhesive layer contains an isocyanate. In a case where the adhesive layer contains an isocyanate, since the adhesiveness between the adhesive layer and the image is further improved, the boiling resistance can be further improved.

### [Image recorded material]

The image recorded material of the present disclosure comprises
an impermeable base material, and
an image disposed on the impermeable base material,
in which the image includes
   a pretreatment layer disposed on the impermeable base material and containing a coagulating agent which is at least one selected from the group consisting of an organic acid, an organic acid salt, and a polyvalent metal compound, and a metal complex, and
   an ink layer disposed on the pretreatment layer and containing a pigment (for example, at least one of a white pigment or a color pigment) and a urethane resin, and
the urethane resin in the pretreatment layer contains a polyol unit, a polyisocyanate unit, and a polyalkylene glycol monoalkyl ether unit.

The image recorded material of the present disclosure can be produced by the image recording method of the present disclosure.

Therefore, a laminate with excellent boiling resistance can be produced.

The components in the pretreatment layer and the components in the ink layer can refer to the components of the pretreatment liquid described above, the components of the first ink described above, and the components of the second ink described above as appropriate.

The laminate of the present disclosure comprises
the above-described image recorded material of the present disclosure, and
a base material for lamination laminated, which is on the image of the image recorded material.

The laminate of the present disclosure can be produced by the method of producing the laminate of the present disclosure.

Therefore, the boiling resistance is excellent.

The preferable aspects of the base material for lamination are as described above. Examples

Hereinafter, the present disclosure will be described in more detail based on examples, but the present disclosure is not limited to the following examples unless the gist thereof is overstepped.

Hereinafter, Example 2 will be mainly described.

### [Example 2]

### <Preparation of aqueous dispersion liquid of urethane resin particles for pretreatment liquid>

Isophorone diisocyanate (IPDI) (26.6 g),
DURANOL T5651 (manufactured by Asahi Kasei Corporation, polycarbonate diol; hereinafter, also referred to as T5651) (80.7 g), and
ethyl acetate (74.9 g) were charged into a three-neck flask, and heated to 70°C.

0.1 g of NEOSTANN U-600 (manufactured by NITTO KASEI Co., Ltd., inorganic bismuth catalyst; hereinafter also referred to as "U-600") was added thereto, and the mixture was stirred at 70°C for 3 hours.

After the temperature of the liquid after stirring was lowered to 60°C, a solution obtained by mixing 6.6 g of diazabicycloundecene (DBU) as a compound for introducing a countercation, 123.6 g of methanol, and 5.0 g of 2-aminoethanesulfonic acid (taurine) as a compound for introducing a dispersion group was added thereto, and the mixture was stirred at 60°C for 1 hour. Next, ethyl acetate (82.8 g) was added thereto, and the mixture was stirred at 60°C for 1 hour. The mixture was stirred for 1 hour and naturally cooled to room temperature, and the concentration thereof was adjusted using ethyl acetate, thereby obtaining a 30 mass% solution of urethane A (solvent: mixed solvent of methanol and ethyl acetate).

Distilled water (100 g) was added to the obtained 30 mass% solution (100 g) of urethane A, and the solution was emulsified at 7,000 rpm for 30 minutes at room temperature using a homogenizer, thereby obtaining an emulsion.

The obtained emulsion was heated to 50°C and stirred at 50°C for 5 hours to distill off ethyl acetate from the liquid.

The liquid from which ethyl acetate had been distilled off was diluted with distilled water so that the solid content reached 25% by mass, thereby obtaining an aqueous dispersion liquid of urethane resin particles (solid content of 25% by mass).

In this example, the dispersion group is an -SO₃⁻ group, and the countercation is an organic ammonium cation consisting of one molecule of diazabicycloundecene and one proton (H⁺).

Table 1 shows the kind of polyol (hereinafter, also referred to as "OH"), the kind of polyisocyanate (hereinafter, also referred to as "NCO"), the molar ratio [OH/NCO], the kind of compound for introducing a dispersion group, the kind of dispersion group, the position of the dispersion group, the amount of -SO₃⁻, the kind of compound for introducing a countercation, and the weight-average molecular weight of the urethane resin in the urethane resin particles in the preparation of the aqueous dispersion liquid of the urethane resin particles.

Here, the molar ratio [OH/NCO] means a molar ratio of the polyol unit to the polyisocyanate unit.

Regarding the position of the dispersion group (in this example, the -SO₃⁻ group), the "terminal" means that the dispersion group is bonded to the terminal of the main chain of the urethane resin.

The position of the dispersion group is determined by the type of the compound for introducing the dispersion group.

In a case where the compound for introducing a dispersion group is a compound containing one active hydrogen group (for example, an amino group, a hydroxy group, and the like), the dispersion group is bonded to a terminal of the main chain of the urethane resin, and in a case where the compound for introducing a dispersion group is a compound containing two active hydrogen groups (for example, N,N-bis(2-hydroxyethyl)-2-aminoethanesulfonic acid described later), the dispersion group is bonded to a side chain of the urethane resin.

The amount of -SO₃⁻ means the content (% by mass) of the -SO₃⁻ group (dispersion group) with respect to the total amount of the urethane resin particles.

### <Preparation of pretreatment liquid>

A pretreatment liquid having the following composition was prepared using components other than the aqueous dispersion liquid of urethane resin particles and the urethane resin particles among the following components.

### - Composition of pretreatment liquid -

· Ethanol ... 5% by mass
· Urethane resin particles ... 10% by mass
· Coagulating agent shown in Table 1 ... 5% by mass
· Surfactant (product name "Olfine E1010", manufactured by Nissin Chemical Co., Ltd.) ... 0.5% by mass · Triisopropanolamine ... 0.5% by mass
· Water ... remaining amount such that total amount of pretreatment liquid is 100% by mass

### <Synthesis of pigment dispersing resin 1>

100 g of dipropylene glycol was added to a three-neck flask comprising a stirrer and a cooling pipe and heated to 85°C in a nitrogen atmosphere.

A solution 1 obtained by mixing 14.0 g of stearyl methacrylate, 35.3 g of benzyl methacrylate, 20.0 g of hydroxyethyl methacrylate, 30.7 g of methacrylic acid, and 0.55 g of 2-mercaptopropionic acid and a solution 2 obtained by dissolving 1.0 g of t-butylperoxy-2-ethylhexanoate (product name "Perbutyl O", manufactured by NOF Corporation) in 20 g of dipropylene glycol were respectively prepared.

The solution 1 was added dropwise to the three-neck flask for 4 hours, and the solution 2 was added dropwise thereto for 5 hours.

After the completion of the dropwise addition, the resulting solution was allowed to further react for 2 hours, heated to 95°C, and heated and stirred for 3 hours so that all unreacted monomers were allowed to react. The disappearance of monomers was confirmed by the nuclear magnetic resonance (¹H-NMR) method.

The obtained reaction solution was heated to 70°C, 12.0 g of dimethylethanolamine was added thereto, propylene glycol was added thereto, and the resulting solution was stirred, thereby obtaining a 30 mass% solution of the pigment dispersing resin 1.

The structural unit of the obtained pigment dispersing resin 1 was confirmed by ¹H-NMR. Further, the weight-average molecular weight (Mw) determined by GPC was 28000.

Further, the mass ratio of respective structural units in the pigment dispersing resin 1 (structural unit derived from stearyl methacrylate/structural unit derived from benzyl methacrylate/structural unit derived from hydroxyethyl methacrylate/structural unit derived from methacrylic acid) was 14/35.3/20/30.7. Here, the mass ratio does not include the mass of dimethylaminoethanol.

The acid value of the pigment dispersing resin 1 was 200 mgKOH/g.

### <Preparation of pigment dispersion liquid 1>

A pigment dispersion liquid 1 was prepared using a Lady Mill model LSG-4U-08 (manufactured by AIMEX Co., Ltd.).

45 parts by mass of titanium dioxide particles (product name, "PF-690", average primary particle diameter: 210 nm, manufactured by Ishihara Sangyo Kaisha, Ltd.) serving as a white pigment, 15 parts by mass of a 30 mass% solution of the pigment dispersing resin 1, and 40 parts by mass of ultrapure water were added to a zirconia container. Further, 40 parts by mass of 0.5 mmφ zirconia beads (Torayceram beads, manufactured by Toray Industries, Inc.) were added thereto, and the mixture was mixed gently using a spatula. The zirconia container having the obtained mixture was put into a Lady mill and dispersed at a rotation speed of 1000 rpm (revolutions per minute) for 5 hours. After completion of the dispersion, the beads were removed by filtration with a filter cloth, thereby obtaining a pigment dispersion liquid 1 having a white pigment concentration of 45% by mass.

### <Preparation of white ink>

A white ink having the following composition was prepared using the pigment dispersion liquid 1 and components other than the pigment dispersing resin 1 and the white pigment among the following components.

### - Composition of white ink -

· White pigment ... 15% by mass
· Pigment dispersing resin 1 ... 1.5% by mass
· 1,2-Propanediol (PG) ... 20% by mass
· Propylene glycol monomethyl ether (PGmME) ... 1% by mass
· Propylene glycol monopropyl ether (PGmPE) ... 1% by mass
· SURFYNOL 104 (manufactured by Nissin Chemical Co., Ltd., acetylene glycolbased surfactant) ... 1% by mass
· BYK-345 (manufactured by BYK Chemie GmbH, silicone-based surfactant) ... 1% by mass
· PVP K-15 (manufactured by Ashland, polyvinylpyrrolidone) ... 0.1% by mass
· SNOWTEX XS (manufactured by Nissan Chemical Corporation, colloidal silica) ... 0.05% by mass in terms of solid content
· PERMARIN UA-368 (manufactured by Sanyo Chemical Industries, Ltd.; resin emulsion containing polycarbonate-based urethane resin) ... 4% by mass as solid content
· Water ... remaining amount set such that total amount of composition reached 100% by mass

### <Image recording>

Image recording was performed using the pretreatment liquid and the white ink.

An ink jet recording device comprising a transport system for continuously transporting a long base material, a wire bar coater for coating the base material with the pretreatment liquid, and an ink jet head for applying the ink was prepared.

Further, a polyethylene terephthalate (PET) base material ("FE2001", manufactured by Futamura Chemical Co., Ltd. (thickness of 12 µm, width of 780 mm, length of 4000 m), hereinafter, referred to as "impermeable base material A")) serving as an impermeable base material was prepared as the base material.

The impermeable base material A was coated with the pretreatment liquid using a wire bar coater such that the amount of the pretreatment liquid to be applied reached approximately 1.7 g/m², and the pretreatment liquid was dried at 50°C for 2 seconds.

The white ink was jetted from the ink jet head and applied in the form of a solid image to the surface of the impermeable base material A, which had been coated with the pretreatment liquid, while the impermeable base material A was continuously transported at 50 m/min using the ink jet recording device. A solid image was recorded by drying the applied white ink with warm air at 80°C for 30 seconds, thereby obtaining an image recorded material.

### -Ink application conditions-

Ink jet head: 1200 dpi/30 inch-width piezo full line head
Amount of ink jetted from ink jet head: 3.0 picoliters (pL)
Driving frequency: 41 kHz (transportation speed of base material: 50 m/min)

### [Evaluation]

The storage stability of the pretreatment liquid and the boiling resistance of the image recorded material were evaluated.

The evaluation method is as follows.

The evaluation results are listed in Table 1.

### (Storage stability of pretreatment liquid)

The viscosity of the pretreatment liquid that was allowed to stand at 25°C for 1 hour after the preparation of the pretreatment liquid (hereinafter, referred to as "viscosity before storage") and the viscosity of the pretreatment liquid that was stored in a sealed state at 60°C for 14 days after the preparation of the pretreatment liquid (hereinafter, referred to as "viscosity after storage") were respectively measured.

Both the viscosity before storage and the viscosity after storage were measured under conditions of 25°C at 100 revolutions per minute (rpm) using VISCOMETER TV-22 (manufactured by TOKI SANGYO Co., Ltd.).

Here, the sealed state indicates a state in which the contents are sealed in a container and the amount of decrease in the mass of the contents is less than 1% by mass in a case where the contents are stored under the conditions of 50°C for 14 days.

A value obtained by subtracting the viscosity before storage from the viscosity after storage was calculated as a degree of an increase in viscosity.

As the degree of an increase in viscosity decreases, the storage stability is excellent.

The evaluation standards are as follows.

### -Evaluation standards for storage stability of pretreatment liquid-

A: The degree of an increase in viscosity was less than 0.3 mPa·s.
B: The degree of an increase in viscosity was 0.3 mPa·s or greater and less than 1.0 mPa·s.
C: The degree of an increase in viscosity was 1.0 mPa·s or greater and less than 2.0 mPa·s.
D: The degree of an increase in viscosity was 2.0 mPa·s or greater.

### (Boiling resistance of laminate)

The solid image of the image recorded material was coated with an adhesive for dry lamination (main agent TM-320 (isocyanate)/curing agent CAT-13B (alcohol compound), manufactured by TOYO Morton) using a dry laminating machine (product name, "FL2", manufactured by FUJI KIKAI KOGYO Co., Ltd.), and a linear low-density polyethylene film (product name, "LL-XMTN", manufactured by FUTAMURA CHEMICAL Co., Ltd., thickness of 40 µm) was laminated thereon as a base material for lamination. The base material for lamination and the image recorded material were bonded to each other in this state, thereby obtaining a laminate.

The obtained laminate was aged at 40°C for 48 hours.

Two sheets of sample pieces having a length of 200 mm and a width of 200 mm were cut out from the aged laminate. The cut-out sample pieces were overlapped with each other and three sides thereof were heat-sealed to form a bag. The obtained bag was filled with pure water and sealed by heat sealing.

The sealed bag was placed in an autoclave for retort food (small sterilizer) (product name, "SR-240", manufactured by Tomy Seiko Co., Ltd.) and subjected to a boiling treatment at 95°C for 40 minutes.

The bag was taken out after the boiling treatment, and the state of the bag was visually observed. Specifically, the boiling resistance was evaluated based on the presence or absence of deformation and laminate floating of the bag.

The evaluation standards are as follows.

The laminate floating is a state in which the image or the base material for lamination is peeled off and thus floating occurs.

### -Evaluation standards for boiling resistance of laminate-

A: Deformation and laminate floating were not observed.
B: Laminate floating was not found, but deformation was confirmed.
C: 1 or more locations of the lamination floating were confirmed.
D: Laminate floating was confirmed on the entire surface of the sample piece.

### (Examples 1 and 3 to 20 and Comparative Examples 1 to 4)

The same operation as in Example 2 was performed except that at least one of the kind of the coagulating agent in the pretreatment liquid, the raw materials of the urethane resin particles (specifically, the kind of polyol, the kind of polyisocyanate, the molar ratio [OH/NCO], the kind of the compound for introducing a dispersion group, the amount of -SO₃⁻, or the kind of the compound for introducing a countercation), or the weight-average molecular weight of the urethane resin in the urethane resin particles was changed as shown in Table 1.

The weight-average molecular weight of the urethane resin in the urethane resin particles was changed by changing the reaction time.

The abbreviations in Table 1 have the following meanings.
· IPDI ... isophorone diisocyanate
· HMDI ... hexamethylene diisocyanate
· HXDI ... 1,3-bis(isocyanatomethyl)cyclohexane,
· PCD ... polycarbonate diol (product name, DURANOL T5651, manufactured by Asahi Kasei Corporation, molecular weight of 1000)
· PPG ... polypropylene glycol (molecular weight of 1000)
· PTMG ... polytetramethylene glycol (product name, PTMG 1000, manufactured by Mitsubishi Chemical Corporation, molecular weight of 1000)
· TCD ... tricyclo[5.2.1.0^{2,6}]decandimethanol
· DMPA ... dimethylol propionic acid
· BES ... N,N-bis(2-hydroxyethyl)-2-aminoethanesulfonic acid
· SSNa ... sodium styrene sulfonate
· DBU ... diazabicycloundecene
· NEt₃ ... triethylamine

The molar ratio [OH/NCO] (that is, the molar ratio of the polyol unit to the polyisocyanate unit) was adjusted by adjusting the charged molar ratio of the polyol to the polyisocyanate.

The amount of -SO₃⁻ (dispersion group) was adjusted by adjusting the charged amount of the compound for introducing the dispersion group.

### [Example 21]

The same operations as in Example 2 were performed except that the urethane resin particles in the white ink were changed to acrylic resin particles.

The white ink in Example 21 was prepared using MOVINYL 972 (manufactured by Japan Coating Resin Co., Ltd.), which is an aqueous dispersion liquid of acrylic resin particles.

### [Comparative Example 5]

The same operations as in Example 2 were performed except that the urethane resin particles in the pretreatment liquid were changed to acrylic resin particles.

The acrylic resin particles used in the pretreatment liquid of Comparative Example 5 were prepared as follows.

Distilled water (256.1 g), OLFINE E1020 (0.9 g), sodium persulfate (NPS) (1.6 g), and sodium hydrogen carbonate (0.6 g) were added to a three-neck flask, and the mixture was heated to 85°C in a nitrogen atmosphere.

A solution 1 obtained by mixing styrene (10.5 g), stearyl methacrylate (18.8 g), hydroxyethyl methacrylate (18.8 g), benzyl acrylate (24.8 g), and dodecanethiol (0.26 g), a solution 2 obtained by mixing sodium styrene sulfonate (SSNa) (6.0 g) and distilled water (28.4 g), and a solution 3 obtained by mixing NPS (1.0 g), distilled water (24.0 g), and sodium hydrogen carbonate (0.6 g) were prepared, respectively.

The solution 1, the solution 2, and the solution 3 were added dropwise to the three-neck flask over 4 hours, respectively. After completion of the dropwise addition, the mixture was stirred at 85°C for 2 hours, allowed to cool to room temperature, and then diluted with distilled water to obtain an aqueous dispersion liquid of acrylic resin particles (solid content: 20% by mass).

**[Table 1]**

| | Pretreatment liquid | | | | | | | | | | | | Ink | Evaluation | |
|---|---|---|---|---|---|---|---|---|---|---|---|---|---|---|---|
| | Coagulating agent | Urethane resin or comparative resin | | | | | | | | | | | Resin | Storage stability | Boiling resistancc |
| | | Polyol (OH) | Polyisocyanate (NCO) | Molar ratio [OH/NCO] | Compound for introducing dispersion group | Kind of dispersion group | Position of dispersion group | Amount of -SO₃⁻ (% by mass) | Countercation with respect to -SO₃⁻ | | Weight-average molecular weight | Tg | | | |
| | | | | | | | | | Compound for introducing countercation | pKa | | | | | |
| Example 1 | Glutaric acid | PCD | IPDI | 0.7 | Hydroxymethanesulfonic acid | -SO₃⁻ | Terminal | 3% | DBU | 12.0 | 10000 | -29°C | Urethane | C | A |
| Example 2 | Glutaric acid | PCD | IPDI | 0.7 | Taurine | -SO₃⁻ | Terminal | 3% | DBU | 12.0 | 10000 | -30°C | Urethane | A | A |
| Example 3 | Acetic acid Ca | PCD | IPDI | 0.7 | Taurine | -SO₃⁻ | Terminal | 3% | DBU | 12.0 | 10000 | -30°C | Urethane | C | C |
| Example 4 | Glutaric acid | PCD | IPDI | 0.7 | Taurine | -SO₃⁻ | Terminal | 3% | DBU | 12.0 | 4000 | -5°C | Urethane | A | C |
| Example 5 | Glutaric acid | PCD/TCD | IPDI | 0.7 | Taurine | -SO₃⁻ | Terminal | 3% | DBU | 12.0 | 10000 | 50°C | Urethane | A | B |
| Example 6 | Glutaric acid | PCD | IPDI | 1.0 | Taurine | -SO₃⁻ | Terminal | 3% | DBU | 12.0 | 10000 | -41°C | Urethane | C | A |
| Example 7 | Glutaric acid | PCD | IPDI | 0.7 | Taurine | -SO₃⁻ | Terminal | 3% | NEt₃ | 9.0 | 10000 | -30°C | Urethane | C | A |
| Example 8 | Glutaric acid | PCD | IPDI | 0.7 | Taurine | -SO₃⁻ | Terminal | 3% | NaOH | 32.0 | 10000 | -30°C | Urethane | A | C |
| Example 9 | Glutaric acid | PPG | IPDI | 0.7 | Taurine | -SO₃⁻ | Terminal | 3% | DBU | 12.0 | 10000 | -41°C | Urethane | A | B |
| Example 10 | Glutaric acid | PTMG | IPDI | 0.7 | Taurine | -SO₃⁻ | Terminal | 3% | DBU | 12.0 | 10000 | -39°C | Urethane | A | B |
| Example 11 | Glutaric acid | PCD/PTMG | IPDI | 0.7 | Taurine | -SO₃⁻ | Terminal | 3% | DBU | 12.0 | 10000 | -49°C | Urethane | A | A |
| Example 12 | Glutaric acid | PCD/PTMG | HMDI | 0.7 | Taurine | -SO₃⁻ | Terminal | 3% | DBU | 12.0 | 10000 | -62°C | Urethane | A | B |
| Example 13 | Glutaric acid | PCD | IPDI | 0.5 | Taurine | -SO₃⁻ | Terminal | 3% | DBU | 12.0 | 8000 | -8°C | Urethane | A | B |
| Example 14 | Glutaric acid | PCD | IPDI | 0.4 | Taurine | -SO₃⁻ | Terminal | 3% | DBU | 12.0 | 8000 | -4°C | Urethane | A | C |
| Example 15 | Glutaric acid | PCD | HMDI | 0.7 | Taurine | -SO₃⁻ | Terminal | 3% | DBU | 12.0 | 10000 | -41°C | Urethane | A | A |
| Example 16 | Glutaric acid | PCD | HXDI | 0.7 | Taurine | -SO₃⁻ | Terminal | 3% | DBU | 12.0 | 10000 | -29°C | Urethane | A | A |
| Example 17 | Glutaric acid | PCD | IPDI | 0.7 | Taurine | -SO₃⁻ | Terminal | 2% | DBU | 12.0 | 10000 | -21°C | Urethane | B | A |
| Example 18 | Glutaric acid | PCD | IPDI | 0.7 | Taurine | -SO₃⁻ | Terminal | 6% | DBU | 12.0 | 10000 | 34°C | Urethane | A | B |
| Example 19 | Glutaric acid | PCD | IPDI | 0.8 | Taurine | -SO₃⁻ | Terminal | 3% | DBU | 12.0 | 21000 | -38°C | Urethane | A | A |
| Example 20 | Glutaric acid | PCD | IPDI | 0.8 | Taurine | -SO₃⁻ | Terminal | 3% | DBU | 12.0 | *50000* | -38°C | Urethane | B | A |
| Example 21 | Glutaric acid | PCD | IPDI | 0.7 | Taurine | -SO₃⁻ | Terminal | 3% | DBU | 12.0 | 10000 | -30°C | Acrylic | A | C |
| Comparative Example 1 | Glutaric acid | PCD | IPDI | 0.7 | DMPA | -COOH | Side chain | 3% | DBU | 12.0 | 10000 | 14°C | Urethane | D | A |
| Comparative Example 2 | Glutaric acid | PCD | IPDI | 0.7 | Taurine | -SO₃⁻ | Terminal | 1% | DBU | 12.0 | 10000 | -15°C | Urethane | D | A |
| Comparative Example 3 | Glutaric acid | PCD | IPDI | 0.7 | Taurine | -SO₃⁻ | Terminal | 7% | DBU | 12.0 | 10000 | -38°C | Urethane | A | D |
| Comparative Example 4 | Glutaric acid | PCD | IPDI | 0.7 | BES | -SO₃⁻ | Side chain | 3% | DBU | 12.0 | 10000 | -35°C | Urethane | D | A |
| Comparative Example 5 | Glutaric acid | Acrylic resin | | | SSNa | -SO₃⁻ | Side chain | 3% | NaOH | 32.0 | 20000 | -8°C | Urethane | A | D |

As shown in Table 1, in each of Examples in which a pretreatment liquid containing a urethane resin containing an -SO₃⁻ group as a dispersion group, in which the content of the -SO₃⁻ group with respect to the total amount of the urethane resin was 2% by mass to 6% by mass, and the -SO₃⁻ group was bonded to a terminal of a main chain of the urethane resin was used, the storage stability of the pretreatment liquid was excellent, and the boiling resistance of the laminate was excellent.

Contrary to Examples, Comparative Examples showed the following results.

In Comparative Example 1 in which the pretreatment liquid containing a urethane resin containing a carboxy group instead of the -SO₃⁻ group was used as the pretreatment liquid containing a dispersion group, the storage stability of the pretreatment liquid was reduced.

In Comparative Example 2 in which the content of the -SO₃⁻ group with respect to the total amount of the urethane resin was less than 2% by mass in the pretreatment liquid, the storage stability of the pretreatment liquid was reduced.

In Comparative Example 3 in which the content of the -SO₃⁻ group with respect to the total amount of the urethane resin was more than 6% by mass in the pretreatment liquid, the boiling resistance of the laminate was degraded.

In Comparative Example 4 in which the pretreatment liquid in which the -SO₃⁻ group was bonded to the side chain instead of the terminal of the main chain of the urethane resin was used, the storage stability of the pretreatment liquid was reduced.

In Comparative Example 5 in which the pretreatment liquid containing an acrylic resin instead of the urethane resin was used, the boiling resistance of the laminate was reduced.

From the results of Examples 2 and 4, it was found that in a case where the weight-average molecular weight of the urethane resin in the pretreatment liquid is 5000 or greater (Example 2), the boiling resistance of the laminate is further improved.

From the results of Examples 2, 5, 11, and 12, it was found that in a case where the glass transition temperature (Tg) of the urethane resin in the pretreatment liquid was -60°C to 40°C (Examples 2 and 11), the boiling resistance of the laminate was further improved.

From the results of Examples 13 and 14, it was found that in a case where the molar ratio [OH/NCO] (that is, the molar ratio of the polyol unit to the polyisocyanate unit) was 0.5 or more (Example 13), the boiling resistance of the laminate was further improved.

From the results of Examples 2 and 6, it was found that in a case where the molar ratio [OH/NCO] was 0.9 or less (Examples 2 and 13), the storage stability of the pretreatment liquid was further improved.

From the results of Examples 2 and 7, it was found that in a case where the pKa of the countercation with respect to the -SO₃⁻ group in the urethane resin in the pretreatment liquid is 10.0 or greater (Example 2), the storage stability of the pretreatment liquid is further improved.

From the results of Examples 2 and 8, it was found that in a case where the countercation with respect to the -SO₃⁻ group in the urethane resin in the pretreatment liquid was an organic base cation (Example 2), the boiling resistance of the laminate was further improved.

From the results of Examples 2, 9, and 10, it was found that in a case where the polyol unit in the urethane resin in the pretreatment liquid includes a polycarbonate diol unit (Example 2), the boiling resistance of the laminate is further improved.

### [Example 101] (Evaluation of multicolor image)

### <Preparation of colored ink>

Colored inks (specifically, a cyan ink, a magenta ink, a yellow ink, and a black ink) with the compositions listed in Table 2 were prepared.

**[Table 2]**

| | Cyan ink | Magenta ink | Yellow ink | Black ink |
|---|---|---|---|---|
| APD4000C (Solid content) | 3 | | | |
| APD4000M (Solid content) | | 4 | | |
| APD1000R (Solid content) | | 2 | | |
| APD4000Y (Solid content) | | | 4 | |
| APD4000K (Solid content) | | | | 4 |
| PG | 25 | 25 | 25 | 25 |
| PGmME | 3 | 3 | 3 | 3 |
| PGmPE | 1 | 1 | 1 | 1 |
| SURFYNOL 104 | 1 | 1 | 1 | 1 |
| BYK-345 | 1 | 1 | 1 | 1 |
| PVP K-15 | 0.1 | 0.1 | 0.1 | 0.1 |
| SNOWTEX XS | 0.05 | *0.05* | 0.05 | 0.05 |
| PERMARINE UA-368 | 6 | 3 | 3 | 3 |
| Water | Remaining amount | Remaining amount | Remaining amount | Remaining amount |

In Table 2, the numerical value of each component denotes the content (% by mass) of the component in the corresponding ink, and "remaining amount" which is the amount of water denotes the remaining amount set such that the total amount of the composition reaches 100% by mass.

In Table 2, the details of the components listed below PG (1,2-propanediol) are the same as the details of the components of the white ink described above.

APD4000C and the like in Table 2 are pigment dispersion liquids, and the details thereof are as follows.

In Table 2, the amount of the pigment dispersion liquid denotes the amount of the solid content (total amount of the pigment and the pigment dispersing agent).
· APD4000C ... Projet Cyan APD4000 (manufactured by FUJIFILM Imaging Colorants, cyan pigment dispersion liquid, pigment concentration: 20% by mass)
· APD4000M ... Projet Magenta APD4000 (manufactured by FUJIFILM Imaging Colorants Inc., magenta pigment dispersion liquid, pigment concentration: 20% by mass)
· APD1000R ... Projet Red APD1000 (manufactured by FUJIFILM Imaging Colorants Inc., red pigment dispersion liquid, pigment concentration: 16% by mass)
· APD4000Y ... Projet Yellow APD4000 (manufactured by FUJIFILM Imaging Colorants Inc., yellow pigment dispersion liquid, pigment concentration: 20% by mass)
· APD4000K ... Projet Black APD4000 (manufactured by FUJIFILM Imaging Colorants Inc., black pigment dispersion liquid, pigment concentration: 15% by mass)

### <Image recording>

Image recording was performed using
the pretreatment liquid in any one of Examples 1 to 21 and Comparative Examples 1 to 5,
the white ink in Example 1, and
the colored inks (specifically, the cyan ink, the magenta ink, the yellow ink, and the black ink) shown in Table 2.

Specifically, each of the following image recording A to image recording D was performed to obtain a solid image.

In the following image recording A to image recording D, each of the conditions for applying the pretreatment liquid, the conditions for drying the applied pretreatment liquid, the conditions for applying the ink, and the conditions for drying the applied ink was set to the same as those in the image recording of Example 1.

Image recording A ... image recording performed in order of application of the pretreatment liquid, drying, application of the cyan ink, application of the white ink, and drying.

Image recording B ... image recording performed in order of application of the pretreatment liquid, drying, application of the cyan ink, application of the magenta ink, application of the yellow ink, application of the black ink, application of the white ink, and drying.

Image recording C ... image recording performed in order of application of the pretreatment liquid, drying, application of the cyan ink, drying, application of the white ink, and drying.

Image recording D ... image recording performed in order of application of the pretreatment liquid, drying, application of the cyan ink, application of the magenta ink, application of the yellow ink, application of the black ink, drying, application of the white ink, and drying.

The preparation of the laminate and the evaluation of the boiling resistance of the laminate were performed in the same manners as in Example 1 using each image recorded material obtained in the image recording A to the image recording D.

As a result, it was confirmed that in a case where the pretreatment liquids of Examples 1 to 21 were used, the boiling resistance of the laminate was excellent similarly to Examples 1 to 21 (that is, image recording performed with the single white ink) even in a case where any of the image recording A to the image recording D was performed.

The disclosure of Japanese Patent Application No.2023-050204 filed on March 27, 2023 is incorporated herein by reference in its entirety.

All of the documents, the patent applications, and the technical standards described in the present specification are incorporated in the present specification by reference to the same extent as in a case in which each of the documents, the patent applications, and the technical standards are specifically and individually described to be incorporated by reference.

## Claims

1. A pretreatment liquid for an ink jet ink, comprising:
a coagulating agent which is at least one selected from the group consisting of an organic acid and a polyvalent metal compound;
water; and
a urethane resin,
wherein the urethane resin contains a polyol unit, a polyisocyanate unit, and an -SO₃⁻group,
a content of the -SO₃⁻ group with respect to a total amount of the urethane resin is 2% by mass to 6% by mass, and
the -SO₃⁻ group is bonded to a terminal of a main chain of the urethane resin.

2. The pretreatment liquid for an ink jet ink according to claim 1,
wherein the urethane resin has a partial structure represented by Formula (I), 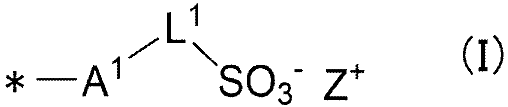
in Formula (I),
* represents a bonding position,
A¹ represents -NH- or -N(L⁴-Y⁴)-,
L⁴ represents a divalent group which is one kind selected from a first group consisting of an alkylene group, an alkenylene group, an alkynylene group, an arylene group, -O-, -NH-, and - C(=O)-, a divalent group formed by bonding two or more kinds selected from the first group, or a single bond,
Y⁴ represents an alkyl group, an alkenyl group, an alkynyl group, an aryl group, a halogen atom, -OH, -OR³, -NH₂, -NR³H, -NR³R⁴, or -C(=O)R³,
R³ and R⁴ each independently represent an alkyl group, an alkenyl group, an alkynyl group, or an aryl group,
L¹ represents an alkylene group having 1 to 4 carbon atoms, and
Z⁺ represents a countercation with respect to an -SO₃⁻ group.

3. The pretreatment liquid for an ink jet ink according to claim 1,
wherein a weight-average molecular weight of the urethane resin is 5,000 or greater.

4. The pretreatment liquid for an ink jet ink according to claim 1,
wherein a glass transition temperature of the urethane resin is -60°C to 40°C.

5. The pretreatment liquid for an ink jet ink according to claim 1,
wherein in the urethane resin, a molar ratio of the polyol unit to the polyisocyanate unit is 0.5 to 0.9.

6. The pretreatment liquid for an ink jet ink according to claim 1,
wherein the urethane resin contains a countercation with respect to the -SO₃⁻ group, and a pKa of the countercation is 10.0 or greater.

7. The pretreatment liquid for an ink jet ink according to claim 1,
wherein the urethane resin contains a countercation with respect to the -SO₃⁻ group, and the countercation is an organic base cation.

8. The pretreatment liquid for an ink jet ink according to claim 1,
wherein the polyol unit includes a polycarbonate diol unit.

9. An ink set comprising:
the pretreatment liquid for an ink jet ink according to any one of claims 1 to 8; and
an ink which contains water, a pigment, and a urethane resin.

10. An image recording method in which the ink set according to claim 9 is used, the method comprising:
a step of applying the pretreatment liquid for an ink jet ink onto an impermeable base material; and
a step of applying the ink onto the impermeable base material onto which the pretreatment liquid for an ink jet ink has been applied, by an ink jet recording method.

11. A method of producing a laminate, comprising:
a step of obtaining an image recorded material that includes the impermeable base material and an image disposed on the impermeable base material by the image recording method according to claim 10; and
a step of laminating a base material for lamination on a side of the image recorded material on which the image is disposed, to obtain a laminate.

12. An image recorded material comprising:
an impermeable base material; and
an image disposed on the impermeable base material,
wherein the image includes
a pretreatment layer disposed on the impermeable base material and containing a coagulating agent which is at least one selected from the group consisting of an organic acid and a polyvalent metal compound, and a urethane resin, and
an ink layer disposed on the pretreatment layer and containing a pigment and a urethane resin,
the urethane resin in the pretreatment layer contains a polyol unit, a polyisocyanate unit, and an -SO₃⁻ group,
a content of the -SO₃⁻ group with respect to a total amount of the urethane resin is 2% by mass to 6% by mass, and
the -SO₃⁻ group is bonded to a terminal of a main chain of the urethane resin.

13. A laminate comprising:
the image recorded material according to claim 12; and
a base material for lamination laminated, which is on the image of the image recorded material.
